# DEMANDE DE BREVET EUROPEEN

(11) **EP 4 491 587 A1**
(43) Date de publication de la demande: **15.01.2025**
(21) Numéro de dépôt: 23204216.8
(22) Date de dépôt: 17.10.2023
(51) Int. Cl.: C02F 9/00, C02F 1/28, C02F 1/32, C02F 1/52, C02F 1/66, C02F 1/76, C02F 1/00, C02F 103/42, C02F 103/44

(54) **SYSTÈME ET PROCÉDÉ DE RECYCLAGE D'UN LIQUIDE**

(30) Priorité: 10.07.2023 FR 2307380
(71) Demandeur: SAS Bleu 66, 66000 Perpignan (FR)
(72) Inventeur: SICART, Sébastien, 66000 PERPIGNAN (FR)
(74) Mandataire: BARRE LAFORGUE

(57) **Abrégé**

L'invention concerne un système de recyclage (10) d'un liquide à recycler, notamment d'eau usée, comprenant :
- au moins filtre (20),
- au moins un moyen de mesure (23) d'un critère représentatif du taux d'encrassement du filtre (20),
- un réservoir (13) de liquide recyclé relié à la sortie (22) du filtre (20),
- un organe de régulation d'entrée (24) comprenant deux configurations, une configuration de recyclage et une configuration de rinçage,
- une unité de contrôle (50) configurée pour passer le système dans un mode de rinçage du filtre (20) pendant un temps de rinçage prédéterminé lorsque le critère mesuré par le moyen de mesure (23) atteint un critère seuil prédéfini.

L'invention se rapporte également à un procédé qui réalise une pluralité de rinçages du filtre à un intervalle déterminé en fonction du critère mesuré.

## Description

### [Domaine technique]

L'invention concerne un système recyclage d'un liquide à recycler, notamment d'eau usée, mais aussi un procédé de recyclage d'un liquide. En particulier, l'invention peut être appliquée pour le recyclage de l'eau des stations de lavage de véhicule ou encore pour le recyclage/traitement de l'eau de piscine.

### [État de la technique antérieure]

On connaît un système de recyclage des eaux usées d'une station de lavage de véhicule, un tel système comprend un moyen de récupération des eaux usées de la station de lavage qui est relié fluidiquement à un débourbeur et un séparateur d'hydrocarbures. Le système de recyclage comporte aussi un réservoir d'eaux usées qui est relié à trois filtres montés en série qui sont eux même reliés à un réservoir d'eau recyclée. Ce système comprend un mode de filtration dans lequel, une pompe de circulation des eaux usées, achemine les eaux usées depuis leur réservoir vers les trois filtres. En sortie du dernier filtre, l'eau recyclée est acheminée puis stockée dans le réservoir à eau recyclée.

Le système de recyclage comprend également un mode de rinçage, dans lequel, une unité de rinçage injecte de l'eau de rinçage, qui est ici de l'eau recyclée, dans la sortie du dernier filtre, l'eau de rinçage ressort en entrée du premier filtre où elle est évacuée. Le système de recyclage comprend une unité de contrôle qui déclenche un mode de rinçage une fois par jour, et de préférence la nuit. Cependant, ce système ne permet pas d'obtenir un rinçage efficace des filtres. En effet, les inventeurs ont observé, après une ou une plusieurs journées d'utilisation de ce système de recyclage, que l'eau recyclée était turbide entre deux modes de rinçage des filtres. Ce qui signifie que le mode de rinçage des filtres ne permet de réduire le taux d'encrassement du filtre de manière suffisamment qualitative pour produire une eau recyclée de bonne qualité, c'est-à-dire, qui présente un faible taux de turbidité.

Dans ce document, le taux d'encrassement du filtre correspond à la quantité de matières piégées dans le média du filtre par rapport à la capacité maximale de matières que piéger le média du filtre. Il est possible d'évaluer le taux d'encrassement d'un filtre en déterminant la turbidité de l'eau en sortie de ce dernier. Par exemple, la turbidité de l'eau peut être quant à elle mesurée à l'aide d'une méthode optique comme les méthodes de photométrie (néphélométrie, opacimétrie, turbidimétrie etc.). D'un point de vue pratique, il est possible de monter un turbidimètre en sortie d'un filtre pour mesurer la turbidité de l'eau en sortie du filtre et de fait en déduire le taux d'encrassement du filtre, ce dernier étant proportionnel de la turbidité de l'eau filtrée en sortie du filtre.

L'invention vise à pallier l'ensemble de ces inconvénients.

### [Exposé de l'invention]

L'invention vise à fournir un rinçage efficace d'un système de filtration d'un liquide à recycler tout en étant économe en liquide de rinçage.

L'invention vise à régénérer un filtre ou une pluralité de filtres utilisés pour filtrer un liquide à recycler en utilisant un minimum de ressources notamment de liquide de rinçage.

L'invention vise à fournir un mode de rinçage intelligent pour un système de filtration d'un liquide à recycler tel que des eaux usées d'une station de lavage.

Dans cette optique l'invention concerne un système de recyclage d'un liquide à recycler, notamment d'eau usée, comprenant :
- au moins filtre comportant une entrée d'alimentation en liquide à recycler et une sortie,
- au moins un moyen de mesure d'un critère représentatif du taux d'encrassement du filtre,
- un réservoir de liquide recyclé relié fluidiquement à la sortie du filtre et configuré pour recevoir le liquide filtré,
- un organe de régulation d'entrée comprenant deux configurations, une configuration de recyclage, dans laquelle le filtre est relié en entrée à une alimentation en liquide à recycler et configuré pour permettre la circulation du liquide à recycler au travers du filtre, et une configuration de rinçage, dans laquelle le filtre est relié en entrée à une évacuation de liquide et configuré pour permettre la circulation d'un liquide provenant dudit filtre, l'organe de régulation d'entrée comprenant notamment une vanne, et
- une unité de contrôle du système configurée pour passer le système dans un mode de rinçage du filtre pendant un temps de rinçage prédéterminé lorsque le critère mesuré par le moyen de mesure atteint un critère seuil prédéfini, l'organe de régulation d'entrée étant en configuration de rinçage et le système étant configurée pour alimenter en un liquide de rinçage la sortie du filtre et faire circuler ledit liquide de rinçage dans le filtre de la sortie vers l'évacuation de liquide dans le mode de rinçage.

Avantageusement, le système de recyclage permet de surveiller un critère représentatif du taux d'encrassement du filtre notamment à l'aide du moyen de mesure, il est ainsi possible de contrôler au travers de l'unité de contrôle, la fréquence de rinçage du filtre en fonction de ce critère représentatif et de déclencher un mode de rinçage du filtre lorsque ledit critère atteint une valeur seuil. La valeur seuil dudit critère peut être déterminée, par exemple, par l'installateur ou l'exploitant du système. Le mode de rinçage du filtre se fait à contre-courant, c'est-à-dire, que le liquide de rinçage s'écoule dans le filtre en sens inverse au liquide à recycler pendant le mode de recyclage.

Le système permet donc de contrôler directement ou indirectement le taux d'encrassement du filtre et de déclencher un mode de rinçage le cas échéant, ceci pour maintenir une bonne qualité de filtration du système de recyclage. Il est également possible de maitriser la durée du mode de rinçage en fonction du taux d'encrassement du filtre que l'on souhaite obtenir. De préférence, la durée du mode de rinçage est courte et notamment inférieure ou égale à 5 minutes, mieux inférieure ou égale à 3 minutes, et encore mieux inférieure ou égale à 1 minute.

Dans des modes de réalisation, le système de recyclage peut comporter une pompe de circulation du liquide à recycler dans le système, l'unité de contrôle étant configurée pour arrêter automatiquement la pompe lorsque le système de recyclage passe dans le mode de rinçage du filtre. L'unité de contrôle coordonne la synchronisation du passage du mode de recyclage au mode de rinçage.

Dans des modes de réalisation, le critère peut comporter le volume de liquide à recycler qui s'est écoulé dans le filtre, le temps depuis le dernier passage en mode de rinçage du système et/ou le taux d'encrassement du filtre. Le système de recyclage peut ainsi être adapté à plusieurs applications et chaque application utilise le critère le plus pertinent en fonction du contexte technique. Par exemple, lorsque le système de recyclage est utilisé pour traiter l'eau d'une piscine, le débit d'eau à recycler passant dans le filtre étant constant, on peut définir une fréquence de rinçage en fonction du temps de fonction du système de recyclage.

Dans des modes de réalisation, le critère peut être le volume de liquide à recycler qui passe au travers du filtre, le volume seuil prédéfini de déclenchement du mode de rinçage du filtre étant, de préférence, inférieur ou égal à 2 m³, mieux inférieur ou égal 1 m³. Suivre le volume de liquide passant dans le filtre permet d'adapter le système à des applications ou le mode de filtration n'est pas activé en continu, par exemple, dans le cas d'une station de lavage de véhicule.

Dans des modes de réalisation, le moyen de mesure du critère peut comprendre un volucompteur, un débitmètre associé à un organe de mesure du temps, un organe de mesure du temps, une mesure de la pression hydrostatique dans le réservoir de liquide recyclé et/ou une jauge de niveau associé à un organe de mesure visuel, photomètre. Le moyen de mesure peut ainsi être adapté au critère que l'on souhaite mesurer dans le cadre d'une application particulière.

Dans des modes de réalisation, le système de recyclage peut comporter une unité de rinçage reliée d'un côté à une alimentation en liquide de rinçage et de l'autre coté à la sortie du filtre, l'unité de contrôle étant configurée pour contrôler l'organe de régulation d'entrée et l'unité de rinçage de façon synchronisée de sorte que, dans le mode de rinçage, l'organe de régulation d'entrée soit en configuration de rinçage et l'unité de rinçage soit configurée pour alimenter la sortie du filtre en liquide de rinçage.

Dans des modes de réalisation, le système de recyclage peut comporter un unique filtre. Ce mode de réalisation peut être utiliser notamment pour traiter les eaux d'une piscine. Le filtre peut alors comporter du sable comme média.

Dans des modes de réalisation, le système de recyclage peut comporter :
- une pluralité de filtres montés en série,
- au moins un moyen de mesure d'un critère représentatif du taux d'encrassement des filtres, et
- une pluralité d'organes de régulation d'entrée disposées en entrée de chacun des filtres et configurées pour prendre, d'une part, une configuration de recyclage permettant la circulation du liquide à recycler dans la série de filtres, et d'autre part, une configuration de rinçage, dans laquelle le filtre est relié en entrée à une évacuation de liquide et configurés pour permettre la circulation d'un liquide provenant dudit filtre,

le réservoir de liquide recyclé étant relié fluidiquement à la sortie du dernier filtre de la série de filtres et configuré pour recevoir le liquide filtré par le dernier filtre,
l'unité de contrôle étant configurée pour passer le système dans un mode de rinçage d'un filtre pendant un temps prédéterminé lorsque le critère mesuré par le moyen de mesure du critère atteint un critère seuil prédéfini pour ledit filtre, l'organe de régulation d'entrée du filtre étant en configuration de rinçage et le système étant configuré pour faire circuler le liquide de rinçage depuis la sortie dudit filtre vers l'évacuation de liquide sans circulation dans les autres filtres de la série de filtres dans le mode de rinçage dudit filtre.

Ce mode de réalisation utilise plusieurs filtres pour optimiser la filtration d'un liquide chargé de matières très diverses en termes de dimensions ou de natures, le système permet avantageusement de surveiller un critère pour chaque filtre et de passer en mode de rinçage sélectivement l'un des filtres lorsque le critère qui lui est associé atteint une valeur seuil. Le système permet ainsi de faire des économies de liquide de rinçage en rinçant uniquement le filtre pour lequel le critère à atteint la valeur seuil.

Dans des modes de réalisation, les filtres de la série de filtres sont différents, notamment comportent des médias filtrant différents, notamment en termes de nature et/ou de granulométrie du média. Cela permet de fournir une filtration d'un liquide à recycler chargé de matières de diverses natures et de dimensions différentes.

Dans des modes de réalisation, les filtres présentent une granulométrie décroissante du premier filtre au dernier filtre de la série de filtres dans le sens de passage du liquide à recycler dans le système. Le premier filtre capture ainsi les plus grosses impuretés, et le filtre suivant capturent des impuretés de plus en plus petites, optimisant la filtration et la qualité de l'eau recyclée produite.

Dans des modes de réalisation, l'unité de contrôle est configurée pour passer le système dans les modes de rinçage des différents filtres à des critères seuils prédéfinis différents, notamment croissant du premier filtre au dernier filtre de la série de filtres dans le sens de passage du liquide à recycler dans le système, et/ou pendant des temps prédéterminés différents, notamment décroissant du premier filtre au dernier filtre de la série de filtres dans le sens de passage du liquide à recycler dans le système. Il est ainsi possible de faire des économies de liquide de rinçage en surveillant le critère de chaque filtre et passant un filtre dans son mode de rinçage uniquement lorsque la valeur seuil qui lui est associée est atteinte.

Dans des modes de réalisation, le système de recyclage peut comporter :
- une pluralité d'organes de régulation de sortie disposés en sortie de chacun des filtres et comportant chacune une voie reliée au filtre, une voie de recyclage reliée au filtre de la série en aval ou au réservoir de liquide recyclé dans le cas du dernier filtre de la série et une voie de rinçage, et
- une unité de rinçage reliée d'un côté à une alimentation en liquide de rinçage et de l'autre coté à chacune des voies de rinçage des organes de régulation de sortie,
l'unité de contrôle étant configurée pour contrôler les organes de régulation d'entrée les organes de régulation de sortie des filtres et l'unité de rinçage de façon synchronisée.

Le système de recyclage permet ainsi de rincer sélectivement un filtre au sein de la pluralité de filtres.

Dans des modes de réalisation, l'unité de contrôle est configurée pour contrôler les organes de régulation d'entrée, les organes de régulation de sortie et l'unité de rinçage pour que le système passe d'un mode de recyclage au mode de rinçage d'un des filtres lorsque le critère mesuré par le moyen de mesure du volume atteint la valeur seuil pour ledit filtre et inversement lorsque le temps prédéterminé est écoulé, le mode de recyclage du liquide étant configuré pour que les organes de régulation d'entrée et les organes de régulation de sortie permettent la circulation du liquide à recycler de l'entrée de liquide à recycler au réservoir et le mode de rinçage pour chaque filtre étant configuré pour que l'organe de régulation de sortie et l'organe de régulation d'entrée dudit filtre permettent la circulation du liquide de rinçage par l'unité de rinçage dans le filtre de l'organe de régulation de sortie dudit filtre vers l'organe de régulation d'entrée dudit filtre configuré pour évacuer le liquide de rinçage vers une sortie d'évacuation du liquide de rinçage.

Dans des modes de réalisation, l'unité de rinçage comporte une pompe de rinçage configurée pour alimenter sous pression, notamment dans le mode de rinçage de chaque filtre, la sortie du ou d'un des filtres, notamment par l'intermédiaire de l'organe de régulation de sortie correspondant, en liquide de rinçage. La pompe de rinçage pressurise le liquide de rinçage afin d'optimiser le rinçage du filtre. En particulier, la pompe de rinçage peut être configurée pour faire circuler le liquide de rinçage à une pression supérieure ou égale à 2 bars et/ou inférieure ou égale à 10 bars, et/ou un débit supérieur ou égal à 0,5l/s,

Dans des modes de réalisation, l'unité de contrôlé peut être configurée pour contrôler la pompe, notamment pour l'actionner dans le mode de rinçage de chaque filtre et pour l'arrêter en dehors de ces modes, notamment de façon synchronisée avec les organes de régulation d'entrée et/ou les organes de régulation de sortie des filtres et de l'unité de rinçage.

Dans des modes de réalisation, l'unité de rinçage est reliée en entrée au réservoir de liquide recyclé. Le liquide recyclé dans le réservoir peut être de liquide de rinçage. Il est ainsi possible de limiter la consommation de liquide de rinçage en dessous d'un certain pourcentage et d'optimiser les ressources, par exemple, lorsque le liquide est de l'eau. Il est ainsi possible de répondre à des normes de limitation de consommation d'eau en vigueur dans des applications telles que les stations de lavage de véhicule. En variante, l'unité de rinçage peut être reliée en entrée à une alimentation en liquide de rinçage externe.

Dans des modes de réalisation, l'unité de contrôle peut comporter un organe de mesure du temps pour mesurer la durée du mode de rinçage et arrêter ledit mode lorsque la durée du mode de rinçage atteint un temps déterminé depuis le passage dans le mode de rinçage dudit filtre. Ceci permet de réduire la consommation de liquide de rinçage tout en optimisant le rinçage du filtre.

Dans des modes de réalisation, le critère seuil prédéfini du ou de chaque filtre peut dépendre de la qualité de l'eau à filtrer, d'un taux d'encrassement seuil du ou de chaque filtre prédéterminé, notamment par un précalibrage du système, et/ou d'un taux de perte en eau de rinçage maximal. Il est ainsi possible d'adapter le système de recyclage à plusieurs applications distinctes.

Dans des modes de réalisation, le système de recyclage peut comporter un réservoir de liquide à recycler configuré pour contenir le liquide à recycler, ledit réservoir est reliée fluidiquement directement ou indirectement à l'entrée d'alimentation du filtre ou de la série de filtres.

Dans des modes de réalisation, le système de recyclage peut comporter un système de décantation en amont de l'entrée d'alimentation du filtre ou de la série de filtres, de préférence entre l'entrée d'alimentation du filtre ou de la série de filtres et le réservoir, pour séparer de manière gravitaire des impuretés contenues dans le liquide à recycler.

Dans des modes de réalisation, le système de décantation peut comporter une unique cuve de décantation ou une pluralité de cuves de décantation montées en parallèles entre elles. Le système de décantation peut comporter une ou plusieurs vannes configurées pour sélectivement alimenter une des cuves dans le cas de plusieurs cuves. Le fait d'avoir des cuves en parallèles permet d'améliorer le traitement en augmentant les volumes accessibles pour le traitement et de pouvoir assurer la maintenance, notamment le nettoyage, d'une cuve tout en continuant le traitement en puisant le liquide à recycler dans une autre cuve.

Cela permet également une continuité de traitement de décantation en autorisant le remplissage d'une cuve pendant le vidage d'une autre vers le ou les filtres.

La séparation gravitaire permet faire tomber les plus grosses impuretés dans le fond de la cuve de décantation et le système de recyclage est configuré pour alimenter en surnageant l'entrée d'alimentation du filtre ou de la série de filtres par pompage. A cet effet, le système peut comporter un tuyau de pompage relié à une pompe, notamment la pompe précitée, dont l'ouverture de pompage s'étend dans la cuve de décantation à une hauteur supérieure ou égale à 5 cm, mieux supérieure ou égale à 8 cm du fond du réservoir, et/ou inférieure ou égale à 20 cm du fond du réservoir. Cela permet de récupérer, par le tuyau de pompage, le surnageant, sans le dépôt en fond de cuve et de limiter la quantité de surnageant sous l'ouverture de pompage. Ainsi les plus grosses impuretés sont séparées du liquide à recycler, ce qui, améliore la filtration et permet de réduire la durée et le nombre de rinçages nécessaires. Dans le cas de plusieurs cuves, la pompe peut être agencé en aval du système de décantation et la pompe peut récupérer le surnageant dans l'une ou l'autre des cuves par l'actionnement automatique ou manuel d'une ou plusieurs vannes.

Dans des modes de réalisation, le système de recyclage peut comporter un organe d'injection d'un coagulant dans le système de décantation agencé en amont du système de décantation. Cet organe d'injection peut être configuré pour injecter le coagulant dans le liquide à recycler circulant dans le conduit d'alimentation alimentant le système de décantation en liquide à recycler en amont du système de décantation, notamment par un piquage dans le circuit d'alimentation du système de décantation.

Dans des modes de réalisation, le système de recyclage peut comporter un module de décontamination UV en sortie du filtre ou de la série de filtres, le module de décontamination est configuré pour irradier le liquide recyclé avant que le réservoir de liquide recyclé ne reçoive le liquide recyclé. En fonction de l'intensité du rayonnement UV qu'il produit, le module de décontamination UV permet de détruire une partie voire la totalité des microorganismes restant dans le liquide recyclé en sortie du filtre ou de la série de filtres.

Dans des modes de réalisation, le réservoir de liquide recyclé peut comprendre une boucle de régulation d'un agent désinfectant tel que le chlore. La boucle de régulation est qui est configurée pour ajuster le taux d'agent désinfectant dans le liquide recyclé par rapport à une consigne de taux d'agent désinfectant prédéterminée. A ces fins, la boucle de régulation peut comprendre une sonde rédox pour mesurer la valeur du taux de chlore par potentiel redox et des moyens d'injection de l'agent désinfectant pour ajuster ledit taux. Le contrôle du taux de l'agent chlorant permet de limiter le développement de microorganismes dans le liquide recyclé qui est contenu dans le réservoir de liquide recyclé. Afin d'améliorer le contrôle du taux de l'agent désinfectant, la boucle de régulation comprend un sonde pH et des moyens d'injection d'au moins un correcteur de pH. Le potentiel redox d'une solution dépend également du pH. Dès lors, le contrôle du pH à une valeur constante par exemple, comprise entre 6 et 8, permet de réaliser des mesures du potentiel redox comparatives entre elles dans le temps. Le correcteur de pH peut également être le chlore.

Dans des modes de réalisation, le système de recyclage peut comprendre un injecteur de produit antimoussant qui est configuré pour injecter un produit antimoussant dans le liquide recyclé qui est stocké dans le réservoir de liquide recyclé.

Dans des modes de réalisation, le dispositif comporte un moyen de limitation des variations de température pour maintenir le liquide à recycler entre 15 et 25°C, mieux entre 16 et 20°C. Le moyen de limitation des variations de température peut être un enfouissement d'au moins un des réservoirs et/ou d'une ou plusieurs cuves, de préférence des réservoirs et de toutes les cuves, dans le sol pour limiter les variations de la température par géothermie. De préférence, le filtre ou la série de filtre ne sont pas enterrés. Cela permet notamment de limiter la prolifération bactériologique dans les réservoirs et les cuves.

L'invention concerne également un procédé de recyclage d'un liquide, notamment à l'aide d'un système de recyclage défini conforme de l'invention, le procédé comportant :
- la filtration d'un liquide à recycler dans au moins un filtre,
- la détection d'un critère représentatif du taux d'encrassement du filtre,
- l'arrêt de la filtration dans ledit filtre lorsque que le critère atteint une valeur seuil prédéterminée, et
- un rinçage du filtre d'une durée inférieure ou égale à 10 min, mieux inférieure ou égale à 5 min, encore mieux inférieure ou égale à 2 min, le rinçage est opéré par le passage d'un liquide de rinçage en sens inverse par rapport au sens de circulation du liquide à recycler dans le filtre durant l'étape de filtration, le rinçage étant configuré pour éliminer moins de 70%, mieux moins de 60%, des matières maximales pouvant être retenues dans le filtre,
- l'évacuation du liquide rinçage après qu'il est parcouru le filtre en sens inverse, et
- la reprise de la filtration dans ledit filtre et de la détection du critère représentatif du taux d'encrassement du filtre lorsque le rinçage est terminé,
le procédé comportant une pluralité de rinçages du filtre qui sont déclenchés en fonction de la détection du critère représentatif du taux d'encrassement du filtre.

Le procédé de recyclage permet d'assurer une qualité de filtration constante en procédant à des rinçages de courte durée mais qui sont répétés plusieurs fois, ces rinçages peuvent être qualifiés de micro-rinçages. La répétition des rinçages étant déterminée par le suivi d'un critère représentatif de l'encrassement du filtre, il est ainsi possible de maintenir un taux d'encrassement du filtre en dessous d'une valeur, par exemple 50% d'encrassement, qui permet d'obtenir une bonne qualité de filtration. L'utilisation de micro-rinçages répétés plusieurs fois permet aussi de limiter la consommation de liquide de rinçage et de ce fait de s'inscrire dans une démarche éco-responsable.

Dans des modes de réalisation, lors du rinçage le liquide de rinçage est injecté dans le filtre à une pression supérieure ou égale à la pression sous laquelle le liquide à recycler est injecté dans le filtre. Ceci permet d'assurer la qualité du rinçage du filtre.

Dans des modes de réalisation, le critère comporte le volume de liquide à recycler passant dans le filtre, le temps depuis le dernier rinçage du filtre et/ou le taux d'encrassement du filtre.

Dans des modes de réalisation, la détection du critère représentatif du taux d'encrassement du filtre comporte la détection du volume de liquide qui passe au travers du filtre lors de l'étape de filtration, le volume seuil prédéfini de déclenchement du rinçage du filtre étant, de préférence, inférieur ou égal à 2 m³, mieux inférieur ou égal 1 m3.

Dans des modes de réalisation, un organe de régulation d'entrée est disposé en entrée du filtre et un organe de régulation de sortie est disposé en sortie du filtre, l'organe de régulation d'entrée et l'organe de régulation de sortie comportent respectivement une configuration de recyclage et une configuration de rinçage ;
lors de la filtration l'organe de régulation d'entrée et l'organe de régulation de sortie passent de manière synchronisée en configuration de recyclage, l'organe de régulation d'entrée permet l'entrée du liquide à recycler dans le filtre, et l'organe de régulation de sortie permet l'écoulement du liquide recyclé vers un réservoir, et
lors d'un rinçage, l'organe de régulation d'entrée et l'organe de régulation de sortie passent de manière synchronisée en configuration de rinçage, l'organe de régulation de sortie permet l'entrée du liquide de rinçage en sortie du filtre, et l'organe de régulation d'entrée, l'évacuation du liquide de rinçage en entrée du filtre.

Dans des modes de réalisation, la filtration est réalisée au travers d'une pluralité de filtres qui sont montés en série, le procédé comportant :
- la détection d'au moins un critère représentatif du taux d'encrassement de chacun des filtres,
- lorsque le critère atteint une valeur seuil prédéterminée pour au moins un des filtres, l'arrêt de la filtration au moins par ledit filtre,
- le rinçage dudit filtre, et
- la reprise de la filtration dans ledit filtre lorsque le rinçage dudit filtre est terminé.

Dans des modes de réalisation, les critères seuils prédéfinis sont différents pour chacun des filtres, notamment croissant du premier filtre au dernier filtre de la série de filtres dans le sens de passage du liquide à recycler dans la série de filtres, et/ou le rinçage est réalisé pendant des temps prédéterminés différents pour chacun des filtres, notamment décroissant du premier filtre au dernier filtre de la série de filtres dans le sens de passage du liquide à recycler dans la série de filtres.

Dans des modes de réalisation, le procédé de recyclage comporte :
- le stockage du liquide filtré dans un réservoir de liquide recyclé, et
- le pompage du liquide recyclé dans ledit réservoir pour être utilisé comme liquide de rinçage.

Dans des modes de réalisation, le procédé de recyclage peut comporter la décantation du liquide à recycler qui permet une séparation gravitaire d'impuretés et du liquide à recycler avant l'étape de filtration, et le pompage du surnageant en vue de l'étape de filtration. En particulier, la décantation peut être mise en oeuvre au sein d'un système de décantation qui peut comporter une ou plusieurs cuves de décantation montées en parallèles les unes aux autres dans le système de recyclage. Le procédé peut comporter le pompage du surnageant des cuves vers l'étape de filtration de façon successives.

Dans des modes de réalisation, le procédé de recyclage comporte le pompage du surnageant dans une première cuve de décantation pendant le remplissage et/ou la décantation d'une autre cuve de décantation ou est la manutention, notamment le nettoyage d'une autre cuve.

Dans des modes de réalisation, un coagulant peut être injecté lors de l'étape de décantation. Le coagulant permet d'améliorer l'agglomération des impuretés et d'accélérer la séparation gravitaire. Il peut être injecté dans le liquide à recyclé en amont de l'étape de décantation.

Dans des modes de réalisation, le procédé de recyclage peut comprendre une étape de décontamination du liquide filtré. De préférence, l'étape de décontamination du liquide peut être faite en sortie de la filtration et avant que le liquide filtré ne soit stocké dans un réservoir. L'étape de décontamination peut être réalisée par traitement UV, le liquide filtré circulant dans un module configuré pour irradier le liquide filtré par un rayonnement UV lors de son passage dans ledit module.

Dans des modes de réalisation, le procédé peut comprendre une étape de contrôle du taux d'un agent désinfectant tel que le chlore dans le liquide recyclé qui est stocké dans le réservoir, si la valeur dudit taux diffère une consigne de taux d'agent désinfectant prédéterminée , le procédé peut injecter une quantité d'agent déterminer pour ajuster le taux de cet agent désinfectant dans le liquide recyclé.

Dans des modes de réalisation, le procédé peut comprendre une étape de contrôle du pH du liquide recyclé, l'étape de contrôle du pH peut être faite par une mesure de pH et une comparaison de cette mesure à une valeur de pH prédéfinie, par exemple, une valeur de pH comprise entre 6 et 8. Si la valeur de pH mesurée diffère de la valeur de pH prédéfinie, le procédé est configuré pour corriger la valeur de pH en injectant un correcteur de pH tel que le Chlore. Avantageusement, le contrôle du pH permet d'améliorer la mesure du potentiel redox et ainsi d'améliorer le contrôle du taux d'agent désinfectant dans le liquide recyclé.

Dans des modes de réalisation, le procédé de recyclage peut comprendre une étape d'injection d'un produit antimoussant dans le liquide recyclé qui est stocké dans un réservoir.

Dans des modes de réalisation, le procédé comporte une étape de limitation des variations de températures dans le ou les réservoirs et/ou dans la ou les cuves, de préférence dans tous les réservoirs et toutes les cuves du dispositif.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] est une représentation schématique d'un système de recyclage conforme d'un mode de réalisation de l'invention.
[Fig. 2] est une représentation schématique d'une variante de système de recyclage conforme d'un mode de réalisation de l'invention.
[Fig. 3] représente un graphique qui illustre le pourcentage de turbidité de l'eau de filtration en fonction du temps du mode de rinçage d'un filtre dont le taux d'encrassement est initialement maximal.
[Fig. 4] est une représentation schématique d'un logigramme illustrant les étapes d'un procédé de recyclage conforme d'un mode de réalisation de l'invention.
[Fig. 5] est une représentation schématique d'un mode de réalisation d'un système de recyclage conforme de l'invention.
[Fig. 6] est une représentation schématique d'un logigramme représentation un mode de réalisation d'un procédé de recyclage conforme de l'invention

### [Description des modes de réalisation]

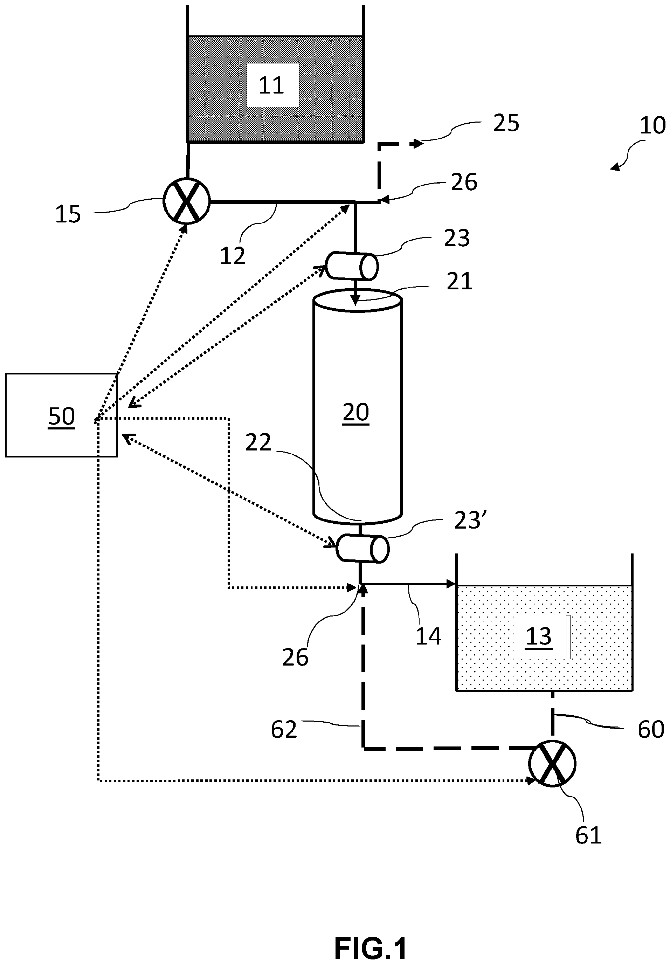

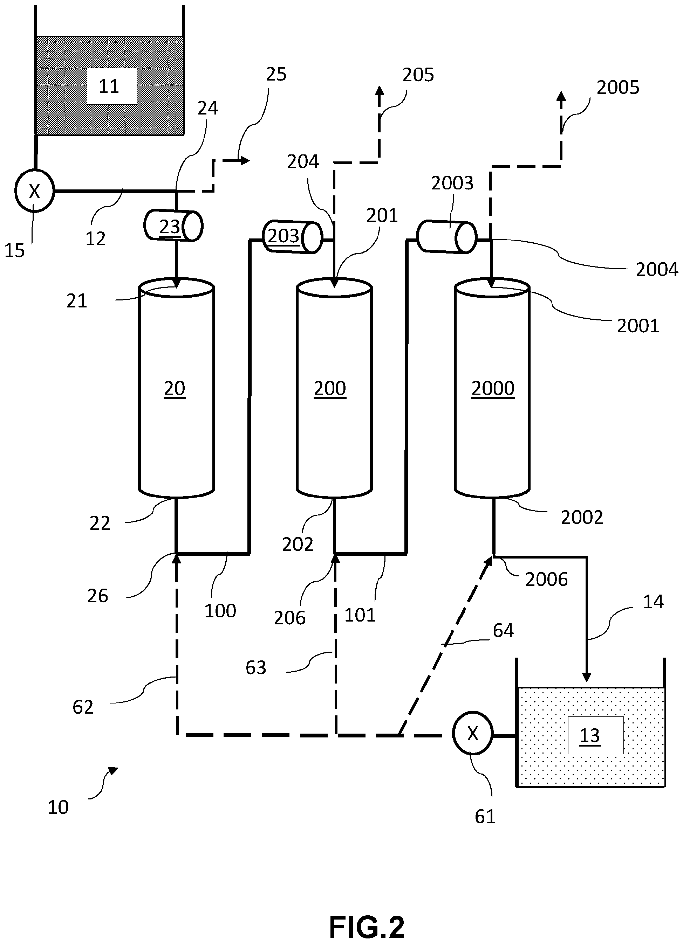

En référence aux figures 1 et 2, l'invention concerne un système de recyclage 10 d'un liquide à recycler, notamment d'eaux usées. Le système de recyclage 10 peut être utilisé dans plusieurs applications, par exemple, pour recycler les eaux usées d'une station de lavage de véhicule ou pour traiter l'eau d'une piscine. Dans le cas d'une piscine, le filtre à sable traditionnellement utilisé pour traiter l'eau d'une piscine peut être intégré au système de recyclage 10 de l'invention.

Comme cela est illustré aux figures 1 et 2, le système de recyclage 10 comprend au moins filtre 20 comportant une entrée d'alimentation 21 en liquide à recycler et une sortie 22. Comme illustré à la figure 1, le système de recyclage 10 peut comporter un unique filtre 20. C'est notamment le cas, lorsque le système de recyclage 10 est utilisé pour le traitement des eaux d'une piscine.

Dans un mode de réalisation illustré à la figure 1, le système de recyclage 10 comprend un réservoir 11 de liquide à recycler. Selon ce mode de réalisation, l'entrée d'alimentation 21 est reliée fluidiquement au réservoir 11 de liquide à recycler. En particulier, un conduit d'alimentation 12 est relié fluidiquement, d'une part, au réservoir 11 de liquide à recycler, et d'autre part, à l'entrée d'alimentation 21 du filtre 20. La capacité du réservoir 11 est dimensionnée en fonction du contexte technique dans lequel est intégré le système de recyclage 10. Par exemple, dans le cadre d'une station de lavage, le réservoir 11 peut présenter une capacité comprise entre 0,5 et 10 m³.

Selon un autre mode de réalisation, l'entrée d'alimentation 21 peut être reliée directement sur un système de collecte de liquide à recycler, par exemple, un récupérateur d'eaux usées.

Le système de recyclage 10 un réservoir 13 de liquide recyclé qui est relié fluidiquement à la sortie 22 du filtre 20. Le réservoir 13 est configuré pour recevoir le liquide filtré après son passage dans le filtre 20. Dans le mode de réalisation de la figure 1, le système de recyclage 10 comprend une voie de recyclage 14 reliée fluidiquement, d'une part à la sortie 22 du filtre 20, et d'autre part au réservoir 13 de liquide recyclé.

Comme illustré à la figure 1, le système de recyclage 10 comprend, en outre, au moins un moyen de mesure 23 d'un critère représentatif du taux d'encrassement du filtre 20. Lorsque ledit critère atteint une valeur seuil prédéfinie du filtre 20, un rinçage du filtre 20 peut être effectué. La valeur du seuil du critère dépend bien entendu de plusieurs paramètres tels que la qualité de l'eau à recycler, d'un taux d'encrassement seuil du ou de chaque filtre prédéterminé, notamment par un pré-calibrage du système, et/ou d'un taux de perte en eau de rinçage maximal.

Le taux d'encrassement peut être déterminé de plusieurs manières comme cela est indiqué précédemment, par exemple, en évaluant la turbidité du liquide en sortie filtre 20. Toutefois, il est également possible d'estimer le taux d'encrassement du filtre 20 en mesurant le volume de liquide à recycler passé dans le filtre 20, ou le temps qui s'est écoulé depuis le dernier rinçage du filtre 20. Par exemple, dans un système de recyclage continu où le débit de liquide à recycler est constant et connu, le critère peut être défini en fonction du temps qui s'écoule depuis le dernier rinçage du filtre. Le traitement des eaux d'une piscine est un exemple typique dans lequel le critère seuil peut être défini ainsi. Par exemple, un rinçage du filtre peut être programmé toutes les 8h.

Lorsque le critère représentatif du taux d'encrassement tient compte du volume de liquide passé dans le filtre 20 pour déclencher le rinçage du filtre 20, le critère seuil peut par exemple être un volume de liquide à recycler passé dans le filtre 20 inférieur ou égal à 2 m³, ou mieux inférieur ou égal 1 m³. Cette méthode peut être notamment utilisée dans le cadre d'une station de lavage de véhicule.

Lorsque la mesure de temps ou de volume est utilisée pour définir le critère représentatif de l'encrassement du filtre, ces mesures peuvent être comparées à une courbe de référence de l'encrassement du filtre en fonction du temps ou du volume passé dans le filtre 20. Cette courbe de référence peut être déterminée par étalonnage ou simulation du système de recyclage 10.

Il est également possible de pré-calibrer le critère en fonction d'un taux de perte en liquide de rinçage maximal. Par exemple, dans le cas d'une station de lavage de véhicule pour laquelle le liquide de rinçage est constitué par l'eau recyclée, il est possible de paramétrer le critère seuil afin d'obtenir une perte d'eau de rinçage inférieure à 23% conformément aux normes en vigueurs sur l'économie de l'eau.

De manière générale, le critère seuil peut être pré-calibré par l'installateur ou l'exploitant du système de recyclage 10 en fonction de l'installation (station de lavage, piscine etc), dans laquelle, le système recyclage 10 est intégré.

Selon un mode de réalisation, le critère seuil représentatif du taux d'encrassement peut correspondre à un taux d'encrassement compris entre 20% et 80%, mieux entre 23% et 60%, encore mieux entre 23% et 50% de l'encrassement maximal du filtre.

Comme cela est décrit précédemment, le critère représentatif du taux d'encrassement est mesuré à l'aide d'un moyen de mesure 23, dans le mode de réalisation de la figure 1, le moyen de mesure 23 est monté sur le système de recyclage 10 en amont du filtre 20 par rapport au sens de la circulation du liquide à recycler dans le filtre 20. Selon ce mode de réalisation, le moyen de mesure 23 mesure le volume de liquide à recycler entrant dans le filtre 20.

Selon un autre mode de réalisation, le moyen de mesure 23 peut être agencé en aval du filtre 20 par rapport au sens de la circulation du liquide à recycler dans le filtre 20. Selon une autre alternative, le moyen de mesure 23 peut être agencé dans le réservoir 13 de liquide recyclé. Cette alternative peut être efficace lorsqu'il n'y a qu'un seul filtre 20 dans le système de recyclage 10.

Dans des modes de réalisation, le moyen de mesure 23 peut comprendre un volucompteur, un débitmètre associé à un organe de mesure du temps tel qu'un compteur d'impulsion, un organe de mesure du temps tel qu'un compteur d'impulsions, une mesure de la pression hydrostatique dans le réservoir de liquide recyclé et/ou une jauge de niveau associée à un organe de mesure visuel, un photomètre tel qu'un néphélomètre, un opacimètre ou un turbidimètre. De préférence, le moyen de mesure 23 comprend un volucompteur ou débitmètre associé à un compteur d'impulsions.

Selon un mode de réalisation particulier illustré à la figure 1, le système de recyclage 10 peut comporter un premier moyen de mesure 23 en amont du filtre 20 et un second moyen de mesure 23' en aval du filtre 20. Selon ce mode de réalisation, un photomètre peut être utilisé comme premier et second moyen de mesure, il est alors possible de mesurer la turbidité du liquide en entrée 21 et en sortie 22 du filtre 20. Il est ainsi possible de comparer la turbidité du liquide avant et après son passage dans le filtre 20. On peut ainsi déterminer le taux d'encrassement du filtre 20.

Selon un mode de réalisation, lorsque le critère représentatif du taux d'encrassement du filtre atteint sa valeur seuil, l'unité de contrôle 50 est configurée pour remettre à zéro l'incrément du moyen de mesure 23. Alternativement, l'unité de contrôle 50 peut être configurée pour monitorer le critère représentatif du taux d'encrassement l'incrément du moyen de mesure 23 jusqu'à ce que l'incrément atteigne une nouvelle fois la valeur seuil dudit critère.

Comme illustré à la figure 1, le système de recyclage 10 comprend un organe de régulation d'entrée 24 qui est positionné en entrée 21 du filtre 20. L'organe de régulation d'entrée 24 comprend deux configurations, une configuration de recyclage et une configuration de rinçage. L'organe de régulation d'entrée 24 peut prendre sélectivement l'une ou l'autre de ces configurations. Dans la configuration de recyclage de l'organe de régulation d'entrée 24, l'entrée 21 du filtre 20 est reliée à une alimentation en liquide à recycler, l'organe de régulation d'entrée 24 est alors configuré pour permettre la circulation du liquide à recycler au travers du filtre 20. A l'inverse dans la configuration de rinçage de l'organe de régulation d'entrée 24, l'entée 21 du filtre 20 est reliée à une évacuation 25 de liquide, l'organe de régulation d'entrée 24 est, dans ce cas, configuré pour permettre la circulation d'un liquide provenant du filtre 20 vers l'évacuation 25.

Le système de recyclage 10 comprend un mode de recyclage, dans lequel, le liquide à recycler passe au travers du filtre 20. Plus particulièrement, le liquide à recycler circule dans le filtre 20 depuis son entrée 21 vers sa sortie 22. Une fois le liquide filtré rejoint le réservoir 13 de liquide de recyclé en vue d'être réutilisé dans l'installation dans laquelle le système de recyclage 10 est intégré. Le liquide recyclé peut aussi être réutilisé au sein du système de recyclage 10. Alternativement, le système de recyclage comprend un mode de rinçage, dans lequel, le filtre 20 est nettoyé de la matière qu'il a accumulé pendant le mode de recyclage qui précède le mode de rinçage.

Le système de recyclage comprend également un mode de rinçage. Dans le mode de rinçage, le liquide de rinçage circule dans le filtre 20 de la sortie 22 vers l'entrée 21 puis vers l'évacuation 25 de liquide. Ce sens de circulation du liquide de rinçage définit un rinçage à contre-courant du filtre 20 par rapport au mode de recyclage, dans lequel, le liquide à recycler circule dans le filtre 20 dans un sens opposé tel que décrit précédemment.

Le mode de recyclage constitue, en quelques sortes, le mode de fonctionnement normal du système de recyclage 10 et permet de recycler le liquide à recycler en piégeant dans le filtre de la matière (impuretés, poussières, boues, salissures etc.) dont le liquide à recycler est chargé.

Comme illustré à la figure 1, le système de recyclage 10 comprend également une unité de contrôle 50. L'unité de contrôle 50 est configurée pour passer le système recyclage 10 du mode de recyclage dans le mode de rinçage du filtre 20. En particulier, lorsque le critère mesuré par le moyen de mesure 23 atteint un critère seuil prédéfini tel que cela est décrit ci-dessus. L'unité de contrôle 50 fait alors passer le système de recyclage 10 dans le mode rinçage du filtre 20 pendant un temps de rinçage d'une durée déterminée.

Pour contrôler le temps de rinçage du mode de rinçage, l'unité de contrôle 50 peut comporter un organe de mesure du temps. L'organe de mesure de temps mesure ainsi le temps rinçage et arrête le mode rinçage lorsque le temps depuis le passage dans le mode de rinçage du filtre 20 atteint le temps de rinçage prédéterminé.

Selon un mode de réalisation, l'unité de contrôle peut comprendre un automate équipé d'un temporisateur qui fait alors office d'organe de mesure temps. De manière alternative, l'unité de contrôle 50 peut comprendre un processeur, une mémoire, une horloge de sorte à stocker et exécuter des algorithmes.

Dans le mode de rinçage, l'organe de régulation d'entrée 24 est en configuration de rinçage et le système de recyclage 10 est configuré pour alimenter en un liquide de rinçage la sortie 22 du filtre 20. Ainsi, dans un mode de réalisation, l'unité de contrôle 50 est configurée pour faire passer l'organe de régulation d'entrée 24 dans une configuration de rinçage, dans laquelle, le liquide de rinçage peut être évacué par l'évacuation 25. Selon ce mode de réalisation, l'organe de régulation d'entrée 24 est de préférence une électrovanne.

Selon un mode de réalisation illustré à la figure 1, le système de recyclage 10 comprend une unité de rinçage. L'unité de rinçage est reliée d'un côté à une alimentation en liquide de rinçage et de l'autre coté à la sortie 22 du filtre 20. Dans un mode de réalisation particulier, l'unité de rinçage est reliée en entrée au réservoir de liquide recyclé 13. Le liquide recyclé constitue alors le liquide de rinçage. Dans l'exemple de la figure 1, l'unité de rinçage est reliée au réservoir de liquide recyclé 13 par un conduit d'alimentation 60. Ce mode de réalisation peut être employé dans le cadre d'installation en circuit fluidique fermé telle qu'une station de lavage de véhicule. En variante, l'unité de rinçage peut être reliée en entrée à une alimentation en liquide de rinçage externe telle qu'un réseau de distribution d'eau.

Comme illustré à la figure 1, l'unité de rinçage peut comporter une pompe de rinçage 61 configurée pour alimenter sous pression la sortie 22 du filtre 20. Ici, la pompe de rinçage est reliée, d'une part, au réservoir 13 par le conduit d'alimentation 24 en liquide recyclé, et d'autre part, à la sortie 22 du filtre 20 au travers d'un conduit de rinçage 62. En particulier, la pompe de rinçage 61 peut être configurée pour faire circuler le liquide de rinçage à une pression supérieure ou égale à 2 bars et/ou inférieure ou égale à 10 bars. La pompe de rinçage 61 peut également être configurée pour fournir un débit de liquide de rinçage supérieur ou égal à 0,5l/s.

Dans le mode de réalisation illustré aux figures 1 et 2, le système de recyclage 10 comprend un organe de régulation de sortie 26 qui relie l'unité de rinçage à la sortie 22 du filtre 20. Dans cet exemple, l'organe de régulation de sortie 26 peut être disposé à la jonction entre le conduit rinçage 62 et la voie de recyclage 14 reliant la sortie 22 du filtre 20 et le réservoir de liquide recycler 13.

L'organe de régulation des flux 26 comprend également deux configurations qui peuvent être sélectivement prises : une configuration de recyclage et une configuration de rinçage. Dans la configuration de recyclage de l'organe de régulation de sortie 26, la sortie 22 du filtre 20 au réservoir de liquide recyclé 13, l'organe de régulation de sortie 26 est alors configuré pour permettre la circulation du liquide recyclé vers ledit réservoir 13. A l'inverse dans la configuration de rinçage de l'organe de régulation de sortie 26, la sortie 22 du filtre 20 est reliée à l'unité de rinçage et notamment au conduit de rinçage 62. L'organe de régulation de sortie 26 permet dans cette configuration la circulation du liquide de rinçage depuis la source de liquide de rinçage vers la sortie 22 du filtre 20 du filtre 20 et ce jusqu'à l'évacuation 25.

Les organes de régulation 24, 26 peuvent respectivement comprendre une vanne, une électrovanne, un clapet antiretour ou tout dispositif pouvant diriger spécifiquement un flux de fluide au niveau de la jonction de plusieurs conduits ou voies, par exemple, une jonction en T ou Y de trois conduits ou voies. De préférence, l'organe de régulation 24, 26 est constitué d'une électrovanne trois voies.

L'unité de contrôle 50 peut être configurée pour contrôler la pompe de rinçage 61, notamment pour l'actionner dans le mode de rinçage du filtre 20 et pour l'arrêter en dehors du mode de rinçage. Lors d'un changement de mode de fonctionnement du système de recyclage 10, par exemple depuis un mode recyclage à un mode de rinçage, la pompe de rinçage 61 est actionnée de façon synchronisée avec les organes de régulation 24, 26, de sorte que le système de recyclage 10 soit en configuration de rinçage et l'unité de rinçage soit configurée pour alimenter la sortie 22 du filtre 20 en liquide de rinçage.

Selon un mode de réalisation, l'unité de contrôle 50 peut être configurée pour passer le système de recyclage 10 du mode de rinçage du ou d'un des filtres à un mode de recyclage. En particulier, lorsque le temps depuis le passage dans le mode de rinçage du filtre 20 atteint la durée prédéterminée du temps rinçage, le système de recyclage 10 est configuré pour arrêter le mode de rinçage et passer à nouveau dans un mode de recyclage, dans lequel, la circulation du liquide à recycler se fait depuis l'entrée 21 du filtre 20 jusqu'au réservoir de liquide recyclé 13.

Dans le mode de réalisation de la figure 1, le système de recyclage 10 comprend une pompe de circulation 15 du liquide à recycler dans le système de recyclage 10. Dans cet exemple, la pompe de circulation 15 est disposée en amont de l'entrée 21 du filtre 20 par rapport au sens circulation du liquide à recycler dans le mode de recyclage. En particulier, la pompe de circulation 15 est reliée au conduit d'alimentation 12 entre le réservoir 11 de liquide à recycler et l'entrée 21 du filtre 20. L'unité de contrôle 50 est configurée pour arrêter automatiquement la pompe de circulation 15 lorsque le système de recyclage 10 passe dans le mode de rinçage du filtre 20. A l'inverse, l'unité de contrôle 50 est configurée pour actionner la pompe de circulation 15, lorsque le système de recyclage 10 passe dans le mode de recyclage.

La pompe de circulation 15 est configurée pour faire circuler le liquide à recycler dans le système de recyclage 10 selon une pression comprise entre 2 et 10 bars. En outre, la pompe de circulation est également configurée pour faire circuler le liquide à recycler dans le système de recyclage 10 selon un débit supérieur ou égale à 0,5 l/s.

Plus largement, l'unité de contrôle 50 est configurée pour piloter de manière synchronisée tous les actionneurs du système de recyclage 10 : la pompe de circulation 15, les organes de gestion des flux 24, 26, la pompe de rinçage 61. Les actionneurs permettent de passer du mode de recyclage au mode de rinçage et inversement du mode rinçage au mode de recyclage.

Sur la figure 1, les communications entre lesdits actionneurs et l'unité de contrôle 50 sont représentées à l'aide d'une flèche en en pointillé qui s'étend depuis l'unité de contrôle 50 vers chacun des actionneurs. Les communications entre le moyen de mesure 23, 23' l'unité de contrôle 50 sont quant à elles représentées par une double flèche, puisque, le moyen de mesure 23 envoie des données à l'unité de contrôle (par exemple de volume s'écoulant), et peut aussi en recevoir (changement de mode, remise à zéro du compteur etc).

La figure 2 illustre un mode de réalisation particulier de l'invention dans lequel le système de recyclage 10 comporte une pluralité de filtres 20, 200, 2000 montés en série. Le mode de réalisation de la figure 2 reprend toutes les caractéristiques du mode de réalisation de la figure 1, le filtre unique 20 étant remplacé par plusieurs filtres 20, 200, 2000 montés en série. Ce mode de réalisation peut être utilisé dans le cadre d'une station de lavage de véhicule.

Dans l'exemple de la figure 2, le système de recyclage 10 comporte trois filtres 20, 200, 2000 qui sont montés en série. De manière plus précise, un premier filtre 20 est relié fluidiquement au réservoir 11 d'eaux à recycler tel que cela est décrit précédemment. En revanche, la sortie 22 du premier filtre 20 est reliée fluidiquement à une entrée 201 d'un deuxième filtre 200. A cet effet, le système de recyclage 10 comprend une voie de recyclage 100 qui relie la sortie 22 du premier filtre 20 à l'entrée 201 du deuxième filtre 200. De la même manière, le deuxième filtre 200 est relié fluidiquement à sa sortie 202 à l'entrée 2001 du troisième filtre 2000, et ce, notamment au travers d'une voie recyclage 101. Selon ce mode de réalisation quel que soit le nombre de filtres 20, 200, 2000 montés en série, la sortie du dernier filtre 2000 de la série de filtres est reliée fluidiquement avec le réservoir 13 de liquide recyclé et ce réservoir 13 est configuré pour recevoir le liquide filtré par le dernier filtre 2000.

Le troisième filtre 2000 comprend une sortie 2002 qui est reliée fluidiquement avec le réservoir 13 de liquide recyclé. En effet, selon ce mode de réalisation la voie de recyclage 14 est branchée à la sortie 2002 du troisième filtre 2000.

Le système de recyclage 10 est ainsi configuré, suivant le montage en série des filtres 20, 200, 2000 pour que l'eau à recycler passe tout d'abord dans le premier filtre 20 puis dans le deuxième filtre 200 et enfin dans le troisième filtre 2000.

Selon un mode de réalisation, les filtres 20, 200, 2000 peuvent être avantageusement différents les uns des autres. En ce sens, les filtres 20, 200, 2000 peuvent comporter des médias filtrant différents que ce soit en termes de nature et/ou de granulométrie du média. Par exemple, le média du premier filtre 20 peut comprendre du silex concassé, sable, verre concassé, des résines etc. Le média du deuxième filtre 200 peut comprendre des résines, silex concassé, sable, verre concassé, des résines etc. Enfin le média du troisième filtre 2000 peut comprendre du charbon actif, silex concassé, sable, verre concassé, des résines etc. Selon un mode de réalisation particulier, le média du premier filtre 20 est en silex concassé, celui du deuxième filtre 200 en résine et le média du troisième filtre 2000 est en charbon actif.

Selon une variante de ce mode de réalisation, le média des filtres peut présenter une granulométrie décroissante du premier filtre 20 au dernier filtre 2000 de la série de filtres dans le sens de passage du liquide à recycler dans le système de recyclage 10. Le média de chaque filtre 20, 200, 2000 peut ainsi être de même nature ou de nature différente et présenter une granulométrie décroissante. Ceci permet de piéger dans chaque filtre différents types de particules dont les dimensions peuvent être également différentes.

Dans le mode de réalisation de la figure 2, le système de recyclage comprend au moins un moyen de mesure 23 d'un critère représentatif du taux d'encrassement des filtres. En réalisant une approximation établissant que le même volume de liquide à recycler passe dans tous les filtres 20, 200, 2000, il est en effet possible de n'utiliser qu'un moyen de mesure 23. Le moyen de mesure 23 peut alors être agencé dans plusieurs positions au sein de la série de filtres 20, 200, 2000, en amont du premier filtre 20, par rapport au sens du circulation du liquide à recycler dans le mode de recyclage, entre deux filtres 20, 200, 2000, en aval du dernier filtre 2000 ou encore dans au sein de l'un des filtres 20, 200, 2000.

Cependant, dans l'exemple de la figure 2, le système de recyclage 10 comprend une pluralité de moyens de mesure 23, 203, 2003 qui sont respectivement associés à un des filtres 20, 200, 2000. Ceci permet ainsi de mesurer le critère représentatif de l'encrassement de chaque filtre 20, 200, 2000 de manière indépendante.

Selon un mode de réalisation, le système de recyclage 10 comprend une pluralité d'organes de régulation des flux 24, 204, 2004 qui sont disposées en entrée 21, 201, 2001 de chacun des filtres 20, 200, 2000 et sont reliés à une évacuation de liquide 25, 205, 2005.

Les organes de gestion des flux 24, 204, 2004 sont configurés pour prendre sélectivement une configuration de recyclage ou une configuration de rinçage. La configuration de recyclage permet la circulation du liquide à recycler dans la série de filtres 20, 200, 2000.

Lorsqu'un organe de régulation d'entrée 24, 204, 2004 prend la configuration de rinçage, le système est configuré pour que le filtre 20, 200, 2000 correspond audit organe de régulation soit relié en entrée 21, 201, 2001 à l'évacuation de liquide 25, 205, 2005 à laquelle ledit organe de régulation d'entrée est relié. Dans cette configuration, le liquide de rinçage circulant à contre-courant dans ledit filtre peut-être évacué par l'évacuation de liquide 25, 205, 2005 correspondante.

De plus, le système de recyclage 10 peut comprendre une pluralité d'organe de régulation de sortie 26, 206, 2006 qui sont disposées en sortie 22, 202, 2002 de chacun des filtres 20, 200, 2000. Chaque organe de régulation de sortie 26, 206, 2006 est relié par une voie à la sortie 22, 202, 2002 du filtre 20, 200, 2000 auquel ledit organe de régulation est associé. De plus comme cela est illustré à la figure 2, chaque organe de régulation de sortie 26, 206, 2006 est également relié à une voie de recyclage 14, 100, 101 qui est elle-même reliée aux autres filtres 20, 200, 2000 de la série qui sont disposés en aval. Il est à noter que dans le cas du dernier filtre 2000 de la série, l'organe de régulation de sortie 2006 est relié par la voie de recyclage 14 au réservoir 13 de liquide recyclé. Chaque organe de régulation de sortie 26, 206, 2006 est aussi relié à une voie de rinçage 62, 63, 64 qui est reliée à une source de liquide de rinçage. Dans l'exemple de la figure 2, la source de liquide de rinçage est le réservoir 13.

Dans le mode de réalisation de la figure 2, l'unité de rinçage reliée d'un côté à une alimentation en liquide de rinçage et de l'autre coté à chacune des voies de rinçage 62, 63, 64. L'unité de rinçage comprend une pompe de rinçage 61 qui est reliée fluidiquement, d'une part, à la source de liquide de rinçage, et d'autre part, aux voies de rinçage 62, 63, 64.

Selon le mode de réalisation de la figure 2, lorsque le critère mesuré par le moyen de mesure 23, 203, 2003 du critère atteint un critère seuil prédéfini pour un des filtres 20, 200, 2000, l'unité de contrôle 50 est configurée pour passer le système dans un mode de rinçage de ce filtre 20, 200, 2000 pendant un temps de rinçage d'une durée prédéterminée.

L'organe de régulation d'entrée 24, 204, 2004 qui est relié à l'entrée dudit filtre 20, 200, 2000 passe alors en configuration de rinçage. L'organe de régulation de sortie 26, 206, 2006 qui est relié à la sortie dudit filtre passe également en configuration de rinçage pour permettre au liquide de rinçage de circuler à contre-courant depuis la source de liquide de rinçage, dans ledit filtre 20, 200, 2000, et jusqu'à l'évacuation 25, 205, 2005 relié à ce filtre 20, 200, 2000 par l'organe de régulation de sortie 26, 206, 2006 en configuration de rinçage.

Dans ce mode de réalisation, lorsque le système de recyclage 10 passe dans le mode de rinçage, il est configuré pour faire circuler à contre-courant le liquide de rinçage dans ledit filtre 20, 200, 2000 vers l'évacuation de liquide 25, 205, 2005 correspondante audit filtre sans que le liquide de rinçage ne circule dans les autres filtres de la série de filtres. A ces fins, l'unité de contrôle 50 est configurée pour contrôler, de façon synchronisée, l'organe de régulation d'entrée 24, 204, 2004 et l'organe de régulation de sortie 26, 206, 2006 des filtres 20, 200, 2000 mais aussi l'unité de rinçage.

Selon le mode de réalisation de la figure 2, l'unité de contrôle 50 est configurée pour faire passer le système de recyclage 10 dans les modes de rinçage des différents filtres 20, 200, 2000 selon des critères seuils prédéfinis qui sont différents pour chaque filtre 20, 200, 2000. Par exemple, le critère seuil prédéfini peut être croissant du premier filtre 20 au dernier filtre 2000 de la série de filtres dans le sens de passage du liquide à recycler dans le système de recyclage 10. Par exemple, si les moyens de mesure 23, 203, 2003 monitorent le volume de liquide à recycler passant dans chaque filtre 20, 200, 2000, le critère seuil du premier filtre 20 peut être calibré entre 50 et 200 litres d'eau à recycler passée dans le premier filtre 20. Le deuxième filtre 200 peut alors avoir un critère seuil calibré entre 400 et 600 litres d'eau à recycler passée dans le deuxième filtre 200. Et le critère seuil du troisième filtre 2000 peut être calibré entre 800 et 1200 litres d'eau à recycler passée dans le troisième filtre 2000. Dans ce mode de réalisation, le premier filtre 20 passe en mode de rinçage de manière plus fréquente que les autres filtres 200, 2000. Cela s'explique car le premier filtre 20 reçoit le liquide à recycler le plus chargé en matières et qu'il présent une capacité d'encrassement supérieur aux autres filtres 20, 200 en captant notamment les particules de matière dont les dimensions sont les plus grandes.

En outre, l'unité de contrôle 50 peut être configurée pour que la durée des temps de rinçage des filtres 20, 200, 2000 soit différente et spécifique de chaque filtre 20, 200, 2000. La durée des temps de rinçage peut être notamment décroissante du premier filtre 20 au dernier filtre 2000 de la série de filtres dans le sens de passage du liquide à recycler dans le système recyclage 10.

Comme illustré dans l'exemple du tableau 1, alors qu'un volume de 1m³ de liquide à recycler est passé dans le système de recyclage 10 de la figure 2 et que l'on réalise des rinçages à un débit constant de 0,6 l/s et pendant une durée de 1 minute pour chaque filtre 20, 200, 2000, le temps de rinçage cumulé du premier filtre 20 est supérieur au temps rinçage cumulé du deuxième filtre 200 qui lui est même supérieur au temps rinçage cumulé du troisième filtre 2000.

**Tableau 1**

| Filtres | Durée d'un mode rinçage (en minute) | Critère seuil en litre | Nombre de mode de rinçage | Durée cumulée des modes de rinçage en minute | Débit du liquide de rinçage en litre par seconde | Liquide de rinçage consommé en litre |
|---|---|---|---|---|---|---|
| Premier filtre 20 | 1 | 200 | 5 | 5 | 0,6 | 180 |
| Deuxième filtre 200 | 1 | 500 | 2 | 2 | 0,6 | 72 |
| Troisième filtre 2000 | 1 | 1000 | 1 | 1 | 0,6 | 36 |

Une fois que la durée du mode de rinçage d'un filtre 20, 200, 200 déterminée s'est écoulé, l'unité de contrôle 50 est configurée pour contrôler de manière synchronisée les organes de régulation d'entrée 24, 204, 2004 et les organes de régulation 26, 206, 2006 de sortie pour que le système passe du mode de rinçage au mode de recyclage. A cet effet, les organes de régulation d'entrée 24, 204, 2004 et les organes de régulation de sortie 26, 206, 2006 sont basculés en configuration de rinçage afin que le liquide à recycler puisse s'écouler à nouveau au travers de la série de filtres 20, 200, 2000 vers le réservoir 13 de liquide recyclé.

Dans les figures 1 et 2, les voies de recyclage 62, 63, 64 et les évacuation 25, 205, 2005 qui sont utilisés dans le mode de rinçage sont représentées par un trait hachuré.

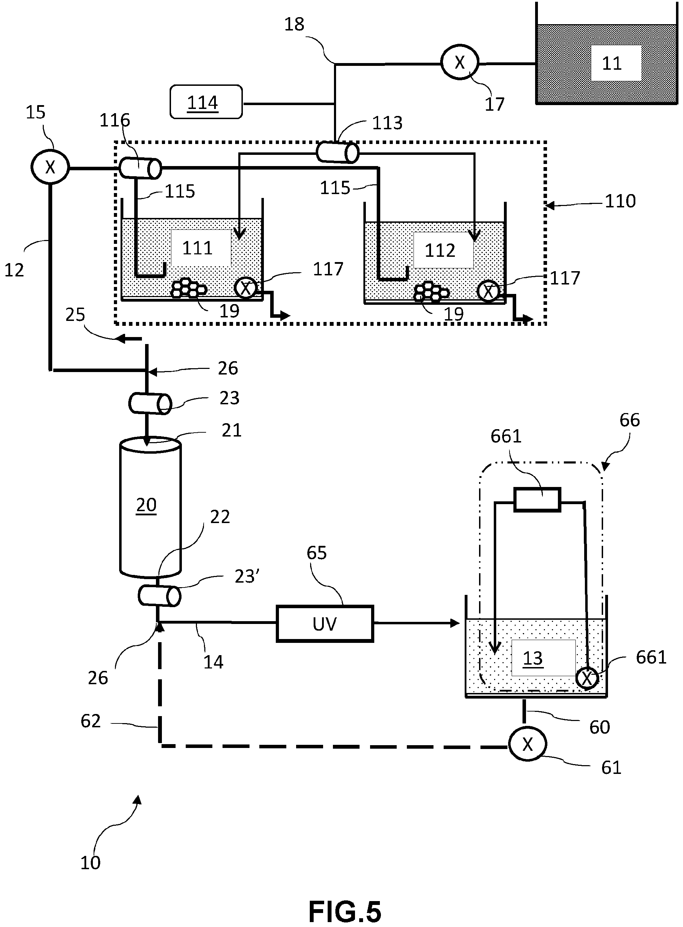

Selon un mode de réalisation illustré à la figure 5, le système de recyclage 10 peut comprendre un système de décantation 110 qui est disposé en amont de l'entrée d'alimentation du filtre 20 ou de la série de filtres 20, 200, 2000 et en aval du réservoir 11. En particulier, le système de décantation 110 est reliée en sortie du réservoir 11 de liquide à recycler au travers d'une voie de transfert 18. Le système de recyclage 10 comprenant une pompe de transfert 17 qui est configuré pour pomper le liquide à recycler contenu dans le réservoir 11 et le transférer vers le système décantation 110.

Dans cet exemple, le système de décantation 110 comprend deux cuves de décantation 111, 112 qui sont montées en parallèles entre elles. La voie de transfert 18 est configurée pour acheminer le liquide à recycler dans les deux cuves de décantation 111, 112 alternativement. En pratique, il est possible de remplir dans un premier temps une première cuve 111, puis dans un second temps une seconde cuve 112. A cet effet, le système de décantation 110 peut comporter au moins une vanne de régulation 113 au niveau du partage de la voie de transfert 18 en deux branches pour alimenter chacune des cuves de décantation 111, 112. La vanne de régulation 113 peut être une électrovanne de type trois voies. Alternativement, il est possible de monter une électrovanne deux voies sur chaque branche d'alimentation des cuves de décantation 111, 112. La vanne de régulation 113 et la pompe de transfert 17 sont pilotées par l'unité de contrôle 50 qui n'est pas représentée sur la figure 5 pour simplifier le dessin.

Comme illustré à la figure 5, le système de recyclage 10 peut comprendre un organe d'injection 114 d'un coagulant dans le système de décantation 110. Cet organe d'injection 114 peut être une pompe doseuse qui est configurée pour délivrer par exemple 0,5 L de produit coagulant par mètre cube de liquide à recycler transféré vers le système de décantation 110. Selon un mode de réalisation, le système de recyclage 10 peut être configuré pour déterminer le volume de liquide à recycler dans une cuve décantation en fonction du débit connu de la pompe de transfert 17 et du temps d'activation de ladite pompe. Dans cet exemple, l'organe d'injection 114 est branché fluidiquement sur la voie de transfert 18 qui alimente le système de décantation 110.

Le produit coagulant améliore et accélère la séparation gravitaire en favorisant la formation d'agglomérats d'impuretés plus lourd, ce qui accélère la décantation dans le fond de chaque cuve de décantation 111, 112. Ceci est illustré de manière schématique à la figure 5 par un amas 19 de matériaux qui tombent au fond de la cuve 111, 112.

Avantageusement, le système de recyclage 10 est configuré pour pomper le surnageant et pour alimenter l'entrée d'alimentation du filtre 20 ou de la série de filtres 20, 200, 2000. A cet effet, le système de décantation 10 peut comporter un tuyau de pompage 115 qui s'étend dans le réservoir à une distance, préférentielle, de 10 cm du fond de chaque cuve de décantation 111, 112. Dans cet exemple, le tuyau de pompage 115 comporte une canne de type de col de cygne inversée. L'ouverture d'aspiration de cette canne est orientée dans une direction opposée au fond de la cuve et permet de prélever les éléments à la hauteur de l'ouverture, c'est à dire le surnageant. Un nettoyage de la cuve régulier permet d'éviter que les agglomérats atteigne cette hauteur. Une telle hauteur est un bon compromis entre fréquence de nettoyage de la cuve, efficacité de traitement.

Comme illustré à la figure 5, le tuyau de pompage 115 est relié fluidiquement à la pompe 15 qui alimente l'entrée 21 du filtre 20. Le système de recyclage 10 peut comprendre au moins une vanne de surnageant 116 configurée pour que le système puisse contrôler, au travers de l'unité de contrôle 50, dans quelle cuve de décantation 111, 112 le pompage du surnageant est réalisé. Dans cet exemple, la vanne de surnageant 116 peut être une électrovanne trois voies disposée à l'embranchement entre le conduit d'alimentation 12 et les tuyaux de pompage 115 de chaque cuve 111, 112. Alternativement, il est possible de monter une électrovanne deux voies sur chaque tuyau de pompage 115.

Le système de recyclage 10 peut également intégrer le système de décantation 10 en amont d'une série de filtres 20, 200, 2000. Dans ce cette configuration, le tuyau de pompage 115 est relié, au travers du conduit d'alimentation 12, à l'entrée 21 du premier filtre 20.

Selon le mode de réalisation illustré à la figure 5, le système de recyclage 10 peut comprendre une pompe d'évacuation 117 qui peut être actionnée lorsque le surnageant a été entièrement prélevé. L'unité de contrôle 50 est ensuite configurée pour enclencher un mode de nettoyage dans lequel le fond de la cuve 111, 112 est rincé avec du liquide provenant du réservoir 11. Pour cela, l'unité de contrôle 50 actionne la pompe de transfert 17 et la vanne de régulation 113 afin de nettoyer la cuve 111, 112 dans laquelle le surnageant a été entièrement prélevé. La pompe d'évacuation 117 permet ensuite d'achever le mode de nettoyage en vidant le fond de la cuve 111, 112. Le système de nettoyage 10 est configuré pour utiliser un volume déterminer de liquide à recycler lors d'un mode de nettoyage. Par exemple, 100 L de liquide à recycler peuvent être utilisés pour nettoyer une cuve de recyclage 111, 112 d'une capacité de 3 m³.

Le fait de réaliser une décantation dans la cuve à recycler 111 ,112 et d'intégrer cette décantation en amont des filtres 20, 200, 2000 permet d'obtenir un liquide recycler translucide tout en maintenant le taux de recyclage supérieur à 80%.

Selon un exemple de réalisation du mode réalisation de la figure 5, le système de recyclage 10 peut comprendre :
- Un réservoir 11 d'une capacité de 2 m³,
- de deux cuves de décantation 111, 112 de liquide à recycler d'une capacité de 3 m³ chacune, les deux cuves 11 sont montées en parallèle dans ledit système,
- deux filtres 20, 200 montés en série et reliés d'un côté à chaque cuve 111, 112 et de l'autre au réservoir 13, un premier filtre 20 de 150 L comprenant un média filtrant permettant une filtration de l'ordre du micron et un second filtre 200 de 50 L comprenant un média filtrant au charbon actif, et
- un réservoir 13 de liquide recyclé d'une capacité de 3m³.

Selon cet exemple, le premier filtre 20 peut comprendre 4 L de cailloux style grain de riz (0-6mm), 20 L de média filtrant activé AFM grade 2 (0.7-2mm) et 80 L de média filtrant activé AFM grade 2 (0.4-0.8mm). Le second filtre 200 peut quant à lui comprendre 15 L de charbon actif sous forme de pellets cylindriques.

Les deux cuves 111, 112 peuvent être uniquement remplies à hauteur de 2,5 m³. Selon cet exemple, on peut utiliser une pompe 15 de circulation de liquide à recycler réglée à une pression de 4 bars et un débit à 1500L/h.

Le rinçage du premier filtre 20 peut être effectué tous les 500 L de liquide filtré sur une durée de 30 secondes et pour le deuxième filtre 200 tous les 5000 L de liquide filtré sur une durée de 30 secondes.

Pour réaliser les rinçages, la pompe de rinçage 61 peut être réglée selon une pression de 4 bars et un débit à 2000L/h.

Le débit de rinçage mesuré à 0.8 L /s, le liquide perdu dans le rinçage du premier filtre 20 est donc de 48L /m³ et dans le deuxième filtre 200 de 5L/m³.

En utilisant 100 L de liquide à recycler pour vidanger une cuve 11, les pertes de liquide sont réduites pour traiter une cuve 111, 112 contenant 2,5 m³ de liquide à recycler.

Au final, le liquide utilisé dans la vidange et le rinçage d'une cuve 111, 112 contenant 2.5 m³ de liquide à recyclé est de 350 L, soit 140 L/m³. Par conséquent, la totalité de dépense de liquide est de 193 L/m³, soit moins de 20%.

Le taux de recyclage de cet exemple de système de recyclage est donc de l'ordre de 80%. Ce qui est conforme des normes attendues que nous avons précédemment présentées.

En outre selon le mode de réalisation de la figure 5, la voie de recyclage 14 qui transfère le liquide recyclé vers le réservoir de liquide recyclé 13 peut comprendre un module de décontamination UV 65. Le module UV 65 est configuré pour irradier, le liquide recyclé en transit vers le réservoir 13, à l'aide d'un rayonnement UV continu. Le module UV 65 peut être intégré sur une section longitudinale de la voie de recyclage 14. Selon une telle configuration, un habitacle opaque embarquant des lampes UV peut être ménager autour de ladite section qui est en outre configurée pour laisser passer le rayonnement UV vers le liquide recyclé en transit. Les lampes UV sont ainsi orientées en direction de la canalisation, cela permet de détruire une partie voire la totalité des microorganismes encore présents dans le liquide recyclé.

Selon un mode de réalisation illustré à la figure 5, le système de recyclage 10 peut comprendre une boucle de régulation 66 d'un agent désinfectant tel que le chlore. La boucle de régulation 66 peut comprendre une pompe 660 immergée afin de prélever le liquide recyclé. Le liquide recyclé est ensuite transféré vers un module de contrôle 661 qui comprend une sonde pH et une sonde redox.

Le module de contrôle 661 du liquide recyclé peut comprendre des moyens d'injection de l'agent désinfectant et des moyens d'injection de correcteur de pH, un réservoir d'agent désinfectant un réservoir de correcteur de pH étant associé au module de contrôle 661 et auxdits moyens d'injection. Selon un mode de réalisation avantageux, l'agent désinfectant et le correcteur de pH peuvent comprendre par du chlore. Selon ce mode de réalisation les moyens d'injection et le réservoir du correcteur de pH et de l'agent désinfectant sont identiques.

Selon un autre mode de réalisation, le module de contrôle peut comporter un premier correcteur de pH permet d'élever la valeur du pH tel que du PH+ et le deuxième correcteur de pH permet de diminuer la valeur de pH tel que du PH - ou du Chlore.

Selon un mode de réalisation, le module de contrôle 611 peut également comprendre des moyens d'injection d'un produit antimoussant. Le produit antimoussant peut être maintenu selon un taux compris entre 5 et 15 ml/m3 de liquide recyclé.

A cet effet, l'unité de contrôle 50 peut être configurée pour informer le module de contrôle 661 de la quantité de liquide recyclé au travers des données de volume de liquide recyclés qui sont mesurées par les moyens de mesure 23, 203, 2003. Par ailleurs, des moyens de mesure du volume de liquide à recycler tels qu'une jauge ou un capteur ultrasons peuvent être intégrés au réservoir 13 pour mesurer le volume de liquide recyclé qu'il contient.

La boucle de régulation 66 telle que définie permet de limiter le développement de microorganismes dans le liquide recyclé et ainsi d'en limiter les odeurs.

Il est à noter que les différentes cuves et réservoirs du système de recyclage 10 peuvent être avantageusement enterrées pour limiter les variations de température par géothermie et ainsi limiter la prolifération bactériologique.

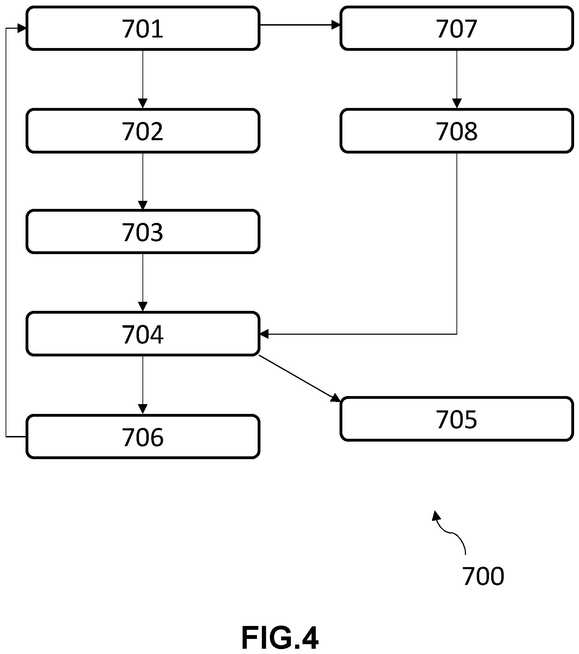

Comme illustré à la figure 4, l'invention concerne également un procédé de recyclage 700 d'un liquide. Le procédé de recyclage 700 peut être employé dans diverses application de recyclage d'un liquide tel que des eaux usées. Par exemple, le procédé de recyclage 700 peut être utilisé pour le recyclage/traitement des eaux d'un bassin tel qu'une piscine, ou encore dans le cadre d'une station de lavage de véhicule.

Le procédé de recyclage 700 peut être notamment mis en oeuvre à l'aide du système de recyclage 10 tel que nous l'avons précédemment décrit.

Dans le mode de réalisation de la figure 1, le procédé de recyclage 700 comporte une étape de filtration 701 d'un liquide à recycler dans au moins un filtre 20. Lors de l'étape de filtration 701, un liquide à recycler traverse le filtre 20 depuis son entrée 21 jusqu'à la sortie 22 du filtre 20. Selon une mode de réalisation, le liquide à recycler peut-être pompé dans un réservoir 11 de liquide à recycler et injecté dans le filtre 20 sous une pression déterminée tel qu'illustré à la figure 1. Le liquide à recycler peut être injecté sous pression comprise entre 2 et 10 bars ou mieux entre 2 et 4 bars. En pratique, le liquide à recyclé est injecté selon un débit constant dans le filtre 20, le débit peut être supérieur ou égale à 0,5 l/s. A cet effet, une pompe de circulation 15 peut être employée telle que décrit dans la figure 1.

Comme cela est illustré à la figure 4, le procédé de recyclage 700 peut comporter une étape de détection 702 d'un critère représentatif du taux d'encrassement du filtre 20. Comme cela est décrit précédemment, selon l'application dans laquelle le procédé de recyclage 700 est utilisé, le critère peut être de plusieurs natures. Selon un mode de réalisation applicable notamment à situation ou la filtration n'est pas constante dans le temps, le critère peut comporter le volume de liquide à recycler passant dans le filtre 20. En particulier, ce critère est adapté pour une station de lavage de véhicule.

D'autres critères tels que le temps qui s'est écoulé depuis le dernier rinçage du filtre 20 et/ou le taux d'encrassement du filtre 20 peuvent être utilisés. Comme cela est indiqué précédemment, le taux d'encrassement du filtre 20 peut être déterminé indirectement en évaluant, en sortie du filtre 20, la charge du liquide filtré en matières. Dans le cas de l'eau on peut ainsi évaluer la turbidité en sortie du filtre 20. Comme cela est décrit ci-dessus, au moins un moyen de mesure 23, 23' adapté est utilisé pour mesurer le critère que l'on doit détecter.

Lorsque que le critère atteint une valeur seuil prédéterminée, le procédé de recyclage comporte une étape d'arrêt 703 de la filtration dans le filtre 20. Selon un mode de réalisation, lorsque le critère détecté est le volume passant dans le filtre 20, le volume seuil prédéfini de déclenchement du rinçage du filtre peut être inférieur ou égal à 2 m³, ou mieux inférieur ou égal 1 m³. De manière générale, le critère seuil peut être paramétré par l'installateur ou l'exploitation du procédé de recyclage 700 en fonction de plusieurs paramètres inhérents au contexte technique dans lequel le procédé de recyclage 700 est utilisé.

L'arrêt 703 de la filtration peut être réalisé en pilotant de manière synchronisée l'organe de régulation d'entrée 24 et l'organe de régulation de sortie 26 qui sont respectivement disposés en entrée et en sortie du filtre 20. En particulier, pour arrêter la filtration dans le filtre 20, les organes de régulation 24, 26 de ce dernier passent de manière synchronisée de leur configuration de filtration à leur configuration de rinçage. Comme cela est décrit précédemment, l'unité de contrôle 50 est configurée pour piloter lesdits actionneurs du système de recyclage 10.

Le procédé de recyclage 700 comprend ainsi une étape de rinçage 704, dans laquelle, un liquide de rinçage passe dans le filtre 20 en sens inverse par rapport au sens de circulation du liquide à recycler dans le filtre 20 durant l'étape de filtration 701. Avantageusement, l'étape de rinçage 704 du filtre 20 comporte une durée inférieure ou égale à 10 min, mieux inférieure ou égale à 5 min, encore mieux inférieure ou égale à 2 min. La durée du temps de rinçage peut être paramétrée par l'installateur ou l'exploitant selon les contraintes techniques du procédé.

En particulier, la durée du temps de rinçage est paramétrée pour éliminer moins de 70%, mieux moins de 60%, des matières maximales pouvant être retenues dans le filtre 20. Comme cela est décrit précédemment, la quantité de matières maximale pouvant être retenues peut-être déterminées indirectement en mesurant la quantité de matières dans le liquide en sortie 22 du filtre 20.

Ce rinçage peut être qualifié de micro-rinçage car il ne vise pas à éliminer la totalité des impuretés piégées dans le filtre 20 et se déroule selon un temps de rinçage plus court qu'un rinçage visant à éliminer 100% des impuretés piégées dans le filtre.

Selon un mode de réalisation, lors de l'étape de rinçage 704 le liquide de rinçage est injecté dans le filtre à une pression supérieure ou égale à la pression sous laquelle le liquide à recycler est injecté dans le filtre 20 au cours de l'étape de filtration 701. Cela contribue à assurer l'efficacité des rinçages de courte durée de l'invention.

Lors de l'étape de rinçage 704, le procédé de recyclage 700 comporte une étape d'évacuation 705 du liquide de rinçage. En effet, après avoir parcouru le filtre à contre-courant le liquide de rinçage est évacué par une évacuation qui est reliée fluidiquement, pendant le rinçage, à l'entrée 21 du filtre 20. C'est l'organe de régulation d'entrée 23 qui permet une telle connexion fluidique entre l'entrée 21 du filtre 20 et l'évacuation 25.

Une fois le rinçage du filtre 20 terminé, typiquement, le procédé de recyclage 700 comprend une étape de reprise 706 de la filtration dans ledit filtre 20 et de la détection du critère représentatif du taux d'encrassement du filtre 20. A cet effet, l'organe de régulation d'entrée et l'organe de régulation de sortie passent de manière synchronisée de leur configuration de rinçage à leur configuration de recyclage. Comme cela est décrit ci-avant, le pilotage des actionneurs qui permettent de changer l'état du système du mode de recyclage au mode de rinçage et vice-versa sont pilotés de manière synchronisée par l'unité de contrôle 50.

Le procédé de recyclage 700 comporte ainsi une pluralité de rinçages 701 du filtre 20 qui sont déclenchés en fonction de la détection du critère représentatif du taux d'encrassement du filtre 20. Il est ainsi possible de conserver une bonne qualité de filtration et de limiter la consommation de liquide de rinçage.

Selon un mode de réalisation illustré à la figure 4, le procédé de recyclage 700 comprend une étape de stockage 707 du liquide filtré dans un réservoir 13 de liquide recyclé. Le stockage a lieu au cours de l'étape de filtration 701 du procédé de recyclage 700.

En outre, le procédé de recyclage 700 peut également comporter une étape pompage 708 du liquide recyclé pour être utilisé comme liquide de rinçage. Dans cette optique et comme cela est illustré à la figure 1, une pompe de rinçage 61 peut être reliée fluidiquement, d'une part, au réservoir de liquide recyclé 13, et d'autre part, à la sortie 22 du filtre 20.

Selon un mode de réalisation, l'étape de filtration 701 est réalisée au travers d'une pluralité de filtres 20, 200, 200 qui sont montés en série comme cela est illustré à la figure 2.

Selon ce mode de réalisation, l'étape de détection 702 détecte au moins un critère représentatif du taux d'encrassement de chacun des filtres 20, 200, 2000. Il est ainsi possible de déterminer directement ou indirectement l'évolution du taux d'encrassement de chacun des filtres 20, 200, 2000 dans le temps au cours de l'étape de filtration 701.

Comme illustré à la figure 4, lorsque le critère atteint une valeur seuil prédéterminée pour au moins un des filtres 20, 200, 2000, le procédé comporte une étape d'arrêt 703 de la filtration au moins par ledit filtre 20, 200, 2000 pour lequel le critère a atteint sa valeur seuil prédéterminée. Selon un mode de réalisation particulier, le procédé de recyclage 700 arrête la filtration pour tous les filtres 20, 200, 2000 de la série. Par exemple, un tel mode de réalisation peut être employé dans le cadre d'une station de lavage de véhicule.

Comme cela est illustré à la figure 4, le procédé de recyclage procède ainsi au rinçage 704 sélectif du filtre 20, 200, 2000 pour lequel le critère a atteint une valeur seuil déterminée. Selon un mode de réalisation illustré à la figure 1, les organes de régulation d'entrée 23, 203, 2003 et les organes de régulation de sortie 26, 206, 2006 permettent de rincer de manière sélective le filtre 20, 200, 2000 pour lequel une valeur seuil du critère a été détectée. Pour cela, l'unité de contrôle 50 pilote sélectivement le passage dans la configuration de rinçage des organes de régulation d'entrée et de sortie de ce filtre. Les organes de régulation des autres filtres restent quant à eux dans leur configuration de filtration.

Comme illustré à la figure 4, le procédé de recyclage 700 comporte la reprise de la filtration 706 dans ledit filtre lorsque la durée du temps de rinçage du filtre s'est écoulée et que le rinçage terminé. L'unité de contrôle 50 actionne alors les organes de régulation d'entrée et de sortie dudit filtre pour les faire passer en configuration de recyclage.

Comme cela est décrit précédemment, les critères seuils prédéfinis sont différents pour chacun des filtres 20, 200, 2000. La fréquence de rinçage peut donc être différente en fonction de la nature du média de chaque filtre mais aussi de la position de chaque filtre dans la série de filtre.

Le tableau 1 donne un exemple, dans lequel le critère est mesuré pour chaque filtre 20, 200, 2000 en fonction du volume de liquide à recycler qui les traverse. Dans cet exemple, le premier filtre 20 comporte un critère seuil de 200 litres, alors que le deuxième filtre comprend un critère seuil de 500 litres et que le troisième filtre 2000 comporte quant à lui un critère seuil de 1000 litres. Ces critères peuvent être calibrés par une méthode expérimentale en fonction du taux d'encrassement mesuré de chaque filtre par une méthode adaptée. Ainsi, lorsque 1 m³ de liquide à recycler est passé dans chaque filtre, le premier filtre 20 a connu 5 rinçages, le second filtre 200 présente 2 rinçages et le troisième filtre 2000, un seul rinçage. Dans l'exemple du tableau 1, la durée du temps rinçage de chaque filtre est identique, cependant, elle pourrait être différente pour chaque filtre 20, 200, 2000. En connaissant le débit du liquide de rinçage, il est possible de connaître le liquide rinçage consommé par chaque filtre et par tous les filtres lorsque 1m³ de liquide à recycler passe dans la série de filtre.

Dans le cas d'espèce, 288 litres de liquide de rinçage ont été utilisés alors que 1000 litres de liquide à recycler à traverser la série de filtre 20, 200, 2000. Ceci représente moins de 30% de perte de liquide si l'on fonction en cycle fermé et que le liquide de recyclage est puisé dans le réservoir 13 de liquide de recyclé. Une telle proportion de perte correspond, par exemple, aux normes en vigueur en matière d'économie d'eau d'une station de lavage de véhicule. Le ou les critères seuils peuvent ainsi être ajustés en fonction de la quantité de liquide de rinçage que l'on souhaite utiliser, par rapport, à la quantité de liquide à recycler qui passe la série de filtres 20, 200, 2000.

Par exemple, les critères seuils peuvent être croissant du premier filtre 20 au dernier filtre 2000 de la série de filtres dans le sens de passage du liquide à recycler dans la série de filtre. Cet exemple est illustré par le tableau 1.

En outre, les temps de rinçage, et notamment les temps de rinçage cumulés, peuvent différents pour chacun des filtres 20, 200, 2000 et notamment décroissants du premier filtre 20 au dernier filtre 2000 de la série de filtres dans le sens de passage du liquide à recycler dans la série de filtre. Cet exemple est également illustré par le tableau 1 où les temps de rinçage cumulés du premier filtre représentent le temps de rinçage le plus important de la série de filtres 20, 200, 2000.

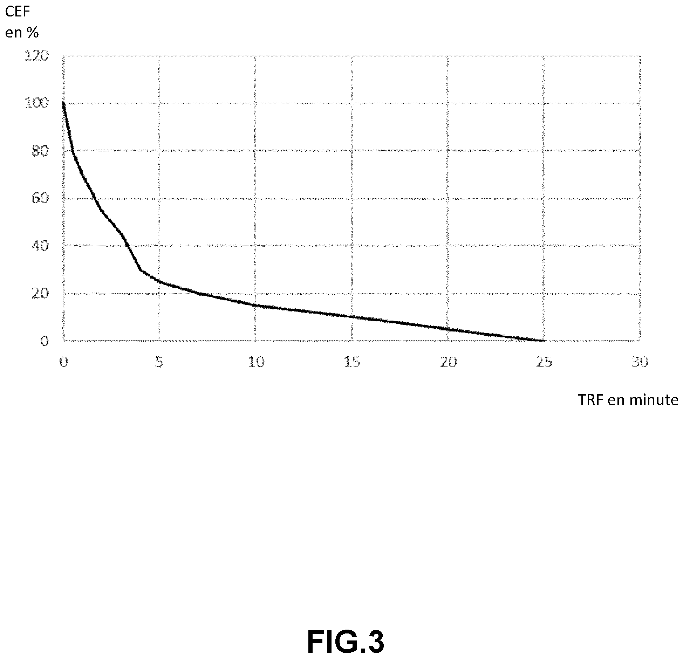

La figure 3 représente un graphique montrant l'évolution en pourcentage de la turbidité d'une eau de filtration CEF en fonction du temps du mode de rinçage TRF d'un système de recyclage 10 conforme de l'invention et intégré à une station de lavage de véhicule. Ce graphique est une modélisation de résultats d'expériences réalisées sur un système conforme du mode de réalisation de la figure 2 et appliqué à une station de lavage de véhicule. En particulier, les inventeurs ont observé, au cours d'un mode de rinçage de chaque filtre 20, 200, 2000 de la série de filtres, la turbidité de l'eau de rinçage sortant du filtre 20 en entre l'entrée 21 et l'évacuation 25. La courbe a été construite au travers d'une appréciation visuelle de l'eau avec un temps d'échantillonnage toutes les 30 secondes. En pratique, plus l'eau circulant à contre-courant dans le filtre est transparente en sortant du filtre 20, plus le taux d'encrassement du filtre est bas. A l'inverse, plus l'eau de rinçage circulant à contre-courant est turbide ou opaque en sortant du filtre, plus le taux d'encrassement du filtre est élevé.

Selon les résultats de ce graphique, les inventeurs se sont aperçus qu'environ 70 % des impuretés sont éliminées dans les quatre premières minutes du rinçage alors qu'il faut 25 minutes pour éliminer 100% des impuretés. Etant donné que le rinçage est effectué sous pression et débit constants, un rinçage qui vise à éliminer de 100% des impuretés consomme environ six fois plus de liquide de rinçage qu'un rinçage qui vise à éliminer 70% des impuretés. Les inventeurs en ont ainsi déduit que plusieurs rinçages d'une durée courte, respectivement intercalés d'une période au cours de laquelle le liquide à recycler est filtré, présentent un rapport qualité de rinçage du filtre/ consommation de liquide rinçage plus avantageux qu'un rinçage long qui vise à atteindre une élimination de 100% des impuretés.

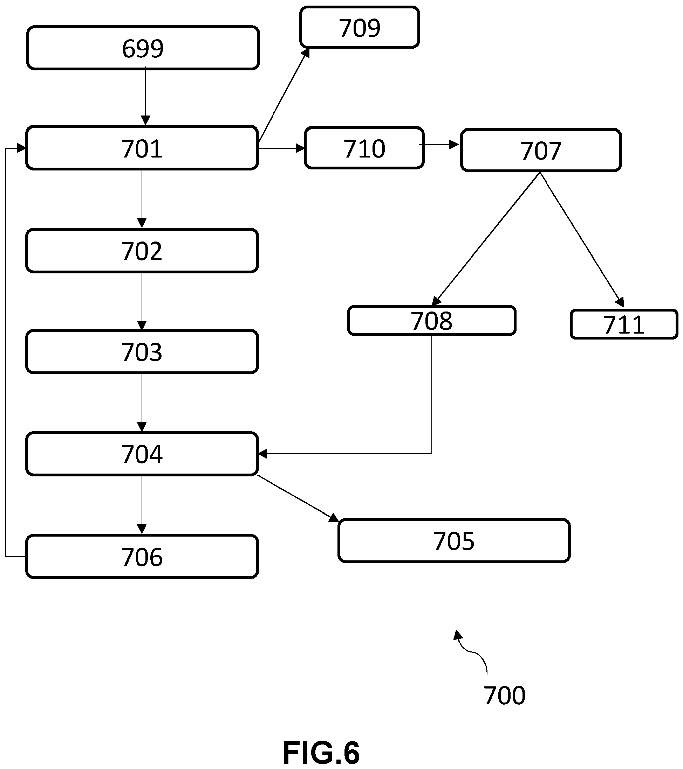

La figure 6 illustre un mode de réalisation du procédé de recyclage 700 mettant en oeuvre le système de recyclage de la figure 5.

Selon ce mode de réalisation, le procédé de recyclage 700 correspond au procédé de recyclage illustré à la figure 4 et comporte une étape de décantation 699 du liquide à recycler en amont de l'étape de filtration 701. Afin de débuter, l'étape de décantation 699 le liquide à recycler est transférer depuis le réservoir 11 vers le système de décantation 110 au travers de la voie de transfert 18. En particulier, le liquide à recycler est transférer vers une cuve de décantation 111, 112. A cet effet, le procédé de recyclage 700 actionne la pompe 17 et la vanne de régulation 113. Lorsque le système de décantation 110 comprend plusieurs cuves de décantation 111, 112, l'actionnement de la vanne 113 permet de sélectionner dans quelle cuve 111, 112 le liquide à recycler est transféré.

Selon un mode de réalisation, tel que cela est décrit précédemment, l'étape de décantation 699 peut être améliorée en ajoutant un coagulant au liquide à recycler afin d'agglomérer par gravité les plus grosses impuretés contenues dans le liquide à recycler. En particulier, l'ajout du coagulant peut être faite au passage du liquide à transférer dans la voie de transfert 18 tel que décrit précédemment.

Lors de l'étape de filtration 701 du liquide à recycler, le procédé de recyclage 700 est configuré pour prélever uniquement le surnageant issu de l'étape de décantation 699.

Lorsque le système de recyclage 10 comprend des cuves décantation 111, 112, l'étape de filtration 701 peut se dérouler en pompant le surnageant d'une ou plusieurs cuves de décantation 111, 112 alors que d'autres cuves décantation 111, 112 réalisent l'étape de décantation 699. Le procédé de recyclage 700 est configuré pour sélectionner une ou plusieurs cuves de décantation 111, 112 pour réaliser le pompage du surnageant en actionnant la ou les vannes de surnageant 116.

Selon un mode de réalisation illustré à la figure 6, le procédé de recyclage 700 peut aussi comprendre une étape de nettoyage 711 d'une cuve à décanter 111, 112. Lorsque le pompage du surnageant d'une cuve de décantation 111, 112 s'achève les résidus de la décantation se trouvent dans le fond de ladite cuve. Le procédé est alors configuré pour réaliser une étape de nettoyage 711 de ladite cuve. Comme cela est décrit précédemment, le procédé est configuré pour actionner la pompe 17 et la vanne de régulation 113 pour injecter un volume déterminer de liquide à recycler dans ladite cuve pour la nettoyer, une fois les résidus solubilisés, ils sont évacués du fond de ladite cuve. Pour cela, le procédé peut actionner la pompe d'évacuation 117.

En outre selon le mode de réalisation de la figure 6, le procédé de recyclage 700 peut comprendre une étape de décontamination 710 du liquide filtré. L'étape de décontamination est réalisée par traitement UV continu du liquide recyclé. Dans l'exemple de la figure 5, l'étape de décontamination UV a lieu lors du transit du liquide recyclé entre le dernier filtre et le réservoir de stockage 13. Toutefois, il également possible d'irradier le liquide recyclé dans le réservoir 13.

Comme illustré à la figure 6, le procédé de recyclage 700 peut comprendre une étape de contrôle 711 du taux d'un agent désinfectant, tel que le chlore, dans le liquide recyclé qui est stocké dans le réservoir 13. Selon un mode de réalisation, le procédé mesure le taux de l'agent désinfectant dans le liquide recyclé tel que décrit précédemment et compare cette mesure avec une consigne de taux de l'agent désinfectant. Lorsque le taux mesuré diffère de la consigne, le procédé de recyclage est configuré pour injecter de l'agent désinfectant dans le liquide recyclé, tel que décrit précédemment, afin d'ajuster le taux en agent désinfectant.

Selon un mode de réalisation l'étape de contrôle 711 mesure également le pH du liquide recyclé et le compare à une valeur de pH prédéfinie. La valeur de pH peut être comprise entre 6,5 et 7,5. Lorsque la valeur de pH mesurée diffère de la valeur de pH prédéfinie le procédé est configuré pour injecter une dose de correcteur de pH déterminée pour faire tendre la valeur de pH du liquide recyclé vers la valeur de pH prédéfinie.

Le procédé de recyclage 700 peut également comporter une étape d'injection de produit antimoussant dans le liquide à recycler.

Les étapes de décantation 699 et de nettoyage 709 peuvent être mise en oeuvre par le procédé de recyclage 700 indépendamment des étapes de décontamination 710 et d'ajustement 711 qui concernent le liquide recyclé.

Bien que le traitement du liquide recyclé après filtration soit amélioré en combinant les étapes de décontamination 710 et d'ajustement du taux d'agent désinfectant 711, selon le liquide à recycler, il est également possible que le système et le procédé de recyclage, selon l'invention, ne mettent en oeuvre que l'une ou l'autre de ces étapes et les caractéristiques qui sont associées à ces étapes.

## Revendications

1. Système de recyclage (10) d'un liquide à recycler, notamment d'eau usée, comprenant :
- au moins filtre (20) comportant une entrée (21) d'alimentation en liquide à recycler et une sortie (22),
- au moins un moyen de mesure (23) d'un critère représentatif du taux d'encrassement du filtre (20),
- un réservoir (13) de liquide recyclé relié fluidiquement à la sortie (22) du filtre (20) et configuré pour recevoir le liquide filtré,
- un organe de régulation d'entrée (24) comprenant deux configurations, une configuration de recyclage, dans laquelle le filtre (20) est relié en entrée (21) à une alimentation en liquide à recycler et configuré pour permettre la circulation du liquide à recycler au travers du filtre (20), et une configuration de rinçage, dans laquelle le filtre (20) est relié en entrée (21) à une évacuation (25) de liquide et configuré pour permettre la circulation d'un liquide provenant dudit filtre (20), l'organe de régulation d'entrée (24) comprenant notamment une vanne, et
- une unité de contrôle (50) du système configurée pour passer le système dans un mode de rinçage du filtre (20) pendant un temps de rinçage prédéterminé lorsque le critère mesuré par le moyen de mesure (23) atteint un critère seuil prédéfini, l'organe de régulation d'entrée (24) étant en configuration de rinçage et le système étant configurée pour alimenter en un liquide de rinçage la sortie (22) du filtre (20) et faire circuler ledit liquide de rinçage dans le filtre (20) de la sortie (22) vers l'évacuation (25) de liquide dans le mode de rinçage.

2. Système de recyclage (10) selon la revendication 1, qui comporte, une pompe de circulation (15) du liquide à recycler dans le système, l'unité de contrôle (50) étant configurée pour arrêter automatiquement la pompe (15) lorsque le système de recyclage (10) passe dans le mode de rinçage du filtre (20).

3. Système de recyclage (10) selon l'une des revendications 1 et 2, dans lequel, le moyen de mesure (23) du critère comprend un volucompteur, un débitmètre associé à un organe de mesure du temps, un organe de mesure du temps, une mesure de la pression hydrostatique dans le réservoir de liquide recyclé, une jauge de niveau associé à un organe de mesure visuel, un photomètre, le critère comportant notamment le volume de liquide à recycler recyclé dans le filtre (20), le temps depuis le dernier passage en mode de rinçage du système ou le taux d'encrassement du filtre (20), de préférence le critère étant le volume de liquide à recycler qui passe au travers du filtre (20), le volume seuil prédéfini de déclenchement du mode de rinçage du filtre (20) étant, de préférence, inférieur ou égal à 2 m3, mieux inférieur ou égal 1 m3.

4. Système de recyclage (10) selon l'une des revendications 1 à 3, comportant une unité de rinçage reliée d'un côté à une alimentation en liquide de rinçage et de l'autre coté à la sortie (22) du filtre (20), l'unité de contrôle (50) étant configurée pour contrôler l'organe de régulation d'entrée (24) et l'unité de rinçage de façon synchronisée de sorte que, dans le mode de rinçage, l'organe de régulation d'entrée (24) soit en configuration de rinçage et l'unité de rinçage soit configurée pour alimenter la sortie (22) du filtre (20) en liquide de rinçage, de préférence l'unité de rinçage est reliée en entrée au réservoir (13) de liquide recyclé, le liquide recyclé dans le réservoir (13) étant de liquide de rinçage.

5. Système de recyclage (10) de liquide selon l'une quelconque des revendications 1 à 4, qui comporte :
- une pluralité de filtres (20, 200, 2000) montés en série,
- au moins un moyen de mesure (23, 203, 2003) d'un critère représentatif du taux d'encrassement des filtres (20, 200, 2000),
- une pluralité d'organes de régulation d'entrée (24, 204, 2004) disposées en entrée (21, 201, 2001) de chacun des filtres (20, 200, 2000) et configurées pour prendre, d'une part, une configuration de recyclage permettant la circulation du liquide à recycler dans la série de filtres (20, 200, 2000), et d'autre part, une configuration de rinçage, dans laquelle le filtre (20, 200, 2000) est relié en entrée (21, 201, 2001) à une évacuation (25, 205, 2005) de liquide et configurées pour permettre la circulation d'un liquide provenant dudit filtre (20, 200, 2000), et
le réservoir de liquide (13) recyclé étant relié fluidiquement à la sortie du dernier filtre de la série de filtres et configuré pour recevoir le liquide filtré par le dernier filtre,
l'unité de contrôle (50) étant configurée pour passer le système dans un mode de rinçage d'un filtre (20, 200, 2000) pendant un temps prédéterminé lorsque le critère mesuré par le moyen de mesure (23, 203, 2003) du critère atteint un critère seuil prédéfini pour ledit filtre (20, 200, 2000), l'organe de régulation d'entrée (24, 204, 2004) du filtre (20, 200, 2000) étant en configuration de rinçage et le système étant configuré pour faire circuler le liquide de rinçage dans depuis la sortie (22, 202, 2002) dudit filtre vers l'évacuation (25, 205, 2005) de liquide sans circulation dans les autres filtres (20, 200, 2000) de la série de filtre dans le mode de rinçage dudit filtre.

6. Système de recyclage (10) selon la revendication 5, dans lequel, les filtres (20, 200, 2000) de la série de filtres sont différents, notamment comportent des médias filtrant différents, notamment en termes de nature et/ou de granulométrie du média, les filtres (20, 200, 2000) présentant de préférence une granulométrie décroissante du premier filtre au dernier filtre de la série de filtres dans le sens de passage du liquide à recycler dans le système.

7. Système de recyclage (10) selon l'une quelconque des revendications 5 et 6, dans lequel, l'unité de contrôle (50) est configurée pour passer le système dans les modes de rinçage des différents filtres (20, 200, 2000) à des critères seuils prédéfinis différents, notamment croissant du premier filtre au dernier filtre de la série de filtres (20, 200, 2000) dans le sens de passage du liquide à recycler dans le système, et/ou pendant des temps prédéterminés différents.

8. Système de recyclage (10) selon l'une quelconque des revendications 5 à 7, comportant :
- une pluralité d'organe de régulation de sortie (26, 206, 2006) disposés en sortie de chacun des filtres (20, 200, 2000) et comportant chacune une voie reliée au filtre (20, 200, 2000), une voie de recyclage (100, 101) reliée au filtre (20, 200, 2000) de la série en aval ou au réservoir (13) de liquide recyclé dans le cas du dernier filtre de la série et une voie de rinçage, et
- une unité de rinçage reliée d'un côté à une alimentation en liquide de rinçage et de l'autre coté à chacune des voies de rinçage (62, 63, 64) des organes de régulation de sortie (26, 206, 2006),
l'unité de contrôle (50) étant configurée pour contrôler les organes de régulation d'entrée (24, 204, 2004) et les organes de régulation de sortie (26, 206, 2006) des filtres (20 ,200, 2000) et l'unité de rinçage de façon synchronisée de préférence l'unité de contrôle (50) étant configurée pour contrôler les organes de régulation d'entrée (24, 204, 2004), les organes de régulation de sortie (26, 206, 2006) et l'unité de rinçage pour que le système passe d'un mode de recyclage au mode de rinçage d'un des filtres (20, 200, 2000) lorsque le critère mesuré par le moyen de mesure du volume atteint la valeur seuil pour ledit filtre et inversement lorsque le temps prédéterminé est écoulé et le mode de recyclage du liquide étant configuré pour que les organes de régulation d'entrée (24, 204, 2004) et les organes de régulation de sorties (26, 206, 2006) permettent la circulation du liquide à recycler de l'entrée de liquide à recycler au réservoir (13) et le mode de rinçage pour chaque filtre (20, 200, 2000) étant configuré pour que l'organe de régulation de sortie (26, 206, 2006) et l'organe de régulation d'entrée (24, 204, 2004) dudit filtre permettent la circulation du liquide de rinçage par l'unité de rinçage dans le filtre (20, 200, 2000) de l'organe de régulation de sortie (26, 206, 2006) dudit filtre (20, 200, 2000) vers l'organe de régulation d'entrée (24, 204, 2004) dudit filtre configuré pour évacuer le liquide de rinçage vers une sortie d'évacuation (25, 205, 2005) du liquide de rinçage.

9. Système de recyclage (10) selon l'une quelconque des revendications 4 à 8, dans lequel l'unité de rinçage comporte une pompe de rinçage (61) configurée pour alimenter sous pression, notamment dans le mode de rinçage de chaque filtre (20, 200, 2000), la sortie (22, 202, 2002) du ou d'un des filtres (20, 200, 2000), notamment par l'intermédiaire de l'organe de régulation de sortie (26, 206, 2006) correspondant, en liquide de rinçage.

10. Système de recyclage (10) selon l'une quelconque des revendications précédentes, dans lequel le critère seuil prédéfini du ou de chaque filtre (20, 200, 2000) dépend de la qualité de l'eau à filtrer, d'un taux d'encrassement seuil du ou de chaque filtre prédéterminé, notamment par un pré-calibrage du système, et/ou d'un taux de perte en eau de rinçage maximal.

11. Système de recyclage (10) selon l'une quelconque des revendications précédentes, qui comporte, un système de décantation (110) en amont de l'entrée d'alimentation du filtre (20) pour séparer de manière gravitaire des impuretés contenues dans le liquide à recycler, le système de recyclage (10) étant configuré pour pomper le surnageant et pour alimenter l'entrée d'alimentation du filtre (20).

12. Procédé de recyclage (700) d'un liquide, notamment à l'aide d'un système de recyclage défini selon l'une quelconque des revendications précédentes, le procédé comportant :
- la filtration (701) d'un liquide à recycler dans au moins un filtre (20, 200, 2000),
- la détection (702) d'un critère représentatif du taux d'encrassement du filtre (20), notamment du volume de liquide à recycler passant dans le filtre (20), du temps depuis le dernier rinçage (704) du filtre (20) et/ou du taux d'encrassement du filtre (20), de préférence du volume de liquide qui passe au travers du filtre (20) lors de l'étape de filtration (701), le volume seuil prédéfini de déclenchement du rinçage du filtre étant, de préférence, inférieur ou égal à 2 m³, mieux inférieur ou égal 1 m³,
- l'arrêt (703) de la filtration dans ledit filtre (20) lorsque que le critère atteint une valeur seuil prédéterminée, et
- un rinçage (704) du filtre (20) d'une durée inférieure ou égale à 10 min, mieux inférieure ou égale à 5 min, encore mieux inférieure ou égale à 2 min, le rinçage est opéré par le passage d'un liquide de rinçage en sens inverse par rapport au sens de circulation du liquide à recycler dans le filtre (20) durant l'étape de filtration, le rinçage étant configuré pour éliminer moins de 70%, mieux moins de 60%, des matières maximales pouvant être retenues dans le filtre (20), en particulier, lors du rinçage (704) le liquide de rinçage est injecté dans le filtre (20) à une pression supérieure ou égale à la pression sous laquelle le liquide à recycler est injecté dans le filtre (20),
- l'évacuation (705) du liquide rinçage après qu'il est parcouru le filtre en sens inverse, et
- la reprise (706) de la filtration (701) dans ledit filtre (20) et de la détection (702) du critère représentatif du taux d'encrassement du filtre (20) lorsque le rinçage est terminé,
le procédé comportant une pluralité de rinçages (704) du filtre (20) qui sont déclenchés en fonction de la détection du critère représentatif du taux d'encrassement du filtre (20).

13. Procédé de recyclage (700) d'un liquide selon la revendication 12, dans lequel, un organe de régulation d'entrée (24) est disposé en entrée du filtre (20) et un organe de régulation de sortie (26) est disposé en sortie du filtre (20), l'organe de régulation d'entrée (24) et l'organe de régulation de sortie (26) comportent respectivement une configuration de recyclage et une configuration de rinçage ;
lors de la filtration (701) l'organe de régulation d'entrée (24) et l'organe de régulation de sortie (26) passent de manière synchronisée en configuration de recyclage, l'organe de régulation d'entrée (24) permet l'entrée du liquide à recycler dans le filtre (20), et l'organe de régulation de sortie (26) permet l'écoulement du liquide recyclé vers un réservoir (13), et
lors d'un rinçage (704), l'organe de régulation d'entrée (24) et l'organe de régulation de sortie (26) passent de manière synchronisée en configuration de rinçage, l'organe de régulation de sortie (26) permet l'entrée du liquide de rinçage en sortie du filtre (20), et l'organe de régulation d'entrée (26), l'évacuation du liquide de rinçage en entrée du filtre (20).

14. Procédé de recyclage (700) d'un liquide selon l'une des revendications 12 et 13 , dans lequel, la filtration (701) est réalisée au travers d'une pluralité de filtres (20, 200, 2000) qui sont montés en série, le procédé comportant:
- la détection (702) d'au moins un critère représentatif du taux d'encrassement de chacun des filtres (20, 200, 2000),
- lorsque le critère atteint une valeur seuil prédéterminée pour au moins un des filtres (20, 200, 2000), l'arrêt (703) de la filtration au moins par ledit filtre,
- le rinçage (704) dudit filtre, et
- la reprise (706) de la filtration dans ledit filtre lorsque le rinçage (704) dudit filtre est terminé,
de préférence les critères seuils prédéfinis étant différents pour chacun des filtres (20, 200, 2000), notamment croissant du premier filtre au dernier filtre de la série de filtres (20, 200, 2000) dans le sens de passage du liquide à recycler dans la série de filtres (20, 200, 2000), et/ou le rinçage est réalisé pendant des temps prédéterminés différents pour chacun des filtres (20, 200, 2000), notamment décroissant du premier filtre au dernier filtre de la série de filtres (20, 200, 2000)dans le sens de passage du liquide à recycler dans la série de filtres (20, 200, 2000).

15. Procédé de recyclage (700) d'un liquide selon l'une des revendications 12 à 14, qui comporte la décantation (699) du liquide à recycler qui permet une séparation gravitaire d'impuretés et du liquide à recycler avant l'étape de filtration (701), et seul le surnageant étant pompé en vue de l'étape de filtration (701).
